# EUROPÄISCHE PATENTSCHRIFT

(11) **EP 2 576 984 B1**
(45) Veröffentlichungstag und Bekanntmachung des Hinweises auf die Patenterteilung: **04.12.2019**
(21) Anmeldenummer: 11703135.1
(22) Anmeldetag: 31.01.2011
(51) Int. Cl.: F01C 9/00, F01C 11/00, F01C 13/00, F02B 53/00, F02B 53/14, F02B 55/00, H02K 7/00, H02K 7/14, H02K 7/18, B60L 50/62, B60L 58/18, B60L 58/21

(54) **AGGREGAT, INSBESONDERE HYBRIDMOTOR, STROMGENERATOR ODER KOMPRESSOR**
AN AGGREGATE, IN PARTICULAR A HYBRID ENGINE, ELECTRICAL POWER GENERATOR OR COMPRESSOR
GROUPE, NOTAMMENT MOTEUR HYBRIDE, GÉNÉRATEUR D'ÉLECTRICITÉ OU COMPRESSEUR

(30) Priorität: 25.05.2010 DE 102010022012
(43) Veröffentlichungstag der Anmeldung: 10.04.2013
(73) Patentinhaber: Huettlin, Herbert, 79585 Steinen (DE)
(72) Erfinder: Huettlin, Herbert, 79585 Steinen (DE)
(74) Vertreter: Witte, Weller & Partner Patentanwälte mbB
(86) Internationale Anmeldenummer: PCT/EP2011/000418
(87) Internationale Veröffentlichungsnummer: WO 2011/147492

(56) Entgegenhaltungen:
- WO-A2-2009/138724
- WO-A2-2010/010995
- DE-A1-102005 062 529
- DE-A1-102007 054 321
- DE-B3-102005 023 721
- GB-A- 2 454 360
- US-A1- 2005 201 884

## Beschreibung

Die Erfindung betrifft ein Aggregat, insbesondere einen Hybridmotor, Stromgenerator oder Kompressor, gemäß dem Oberbegriff des Patentanspruchs 1 und gemäß dem Oberbegriff des Anspruchs 7.

Ein Aggregat der eingangs genannten Art ist aus DE 10 2005 062 529 B4 bekannt.

Das aus dem vorstehend genannten Dokument bekannte Aggregat ist als Hybridmotor ausgebildet, der auch als Stromgenerator verwendet werden kann.

Bei herkömmlichen sogenannten Hybridantrieben wird üblicherweise ein Verbrennungsmotor und ein Elektromotor miteinander kombiniert. Derartige Hybridantriebe, die heutzutage zunehmend an Bedeutung gewinnen, haben den Vorteil, dass beispielsweise im Stadtverkehr der schadstofffreie Elektroantrieb genutzt werden kann, während im Überlandverkehr und auf Autobahnen der Verbrennungsmotor genutzt wird.

Während herkömmliche Hybridantriebe auf Verbrennungsmotoren basieren, die als Hubkolbenmotoren mit linear beweglichen Kolben ausgebildet sind, wobei die Kolben beispielsweise in Reihe oder in V-Form angeordnet sind, ist bei dem aus dem eingangs genannten Dokument bekannten Hybridmotor der kolbenmotorische Teil, der als Verbrennungsmotor dient, aus zwei Kugelmotorhälften mit im Gehäuse um eine Drehachse umlaufenden Kolben ausgebildet, wobei zwischen den beiden Halbkugelmotorhälften der elektromotorische Teil angeordnet ist. Obwohl dieser bekannte Hybridmotor im Vergleich zu herkömmlichen Hybridantrieben in Richtung der Drehachse des Rotors bereits relativ kurz baut, weil der elektromotorische Teil von den beiden Halbkugelmotoren in Sandwich-Anordnung in einem gemeinsamen Gehäuse untergebracht ist, besteht weiterhin das Bedürfnis an einer noch kompakteren Bauweise eines solchen Hybridmotors.

Das Aggregat der vorliegenden Erfindung ist nicht auf einen Hybridmotor beschränkt, sondern lässt sich auch nur als Stromgenerator oder als Kompressor ausgestalten.

GB 2 454 360 A offenbart ein Aggregat mit einem kolbenmotorischen Teil als Verbrennungsmotor und einem elektromotorischen Teil. Der kolbenmotorische Teil weist eine Kolben-Zylinder-Anordnung auf, in der ein Kolben, der die Form eines toroidalen Abschnittes aufweist, und ein Zylinder so angeordnet sind, dass sie um eine gemeinsame Achse relativ zu einer Statoranordnung des elektromotorischen Teils umlaufen, um so Strom zu erzeugen. Der Kolben und der Zylinder sind mit Federn ausgerüstet, um ein Masse-Feder-System zu bilden, wobei die Anordnung dazu ausgelegt ist, dass die Verbrennung eines Brennstoffgemisches in einer Brennkammer, die zwischen dem Zylinder und dem Kolben ausgebildet ist, bewirkt, dass der Kolben und der Zylinder relativ zueinander um ihre gemeinsame Drehachse oszillieren. Der Kolben und der Zylinder sind von zwei rotierenden Scheiben eingefasst, die an ihrem Umfangsrand Magnete tragen. Die beiden Statoren des elektromotorischen Teils bilden den feststehenden Teil des elektromotorischen Teils.

WO 2009/138724 A2 offenbart eine thermodynamische Vorrichtung, mit einem Gefäß, wobei das Gefäß Verdrängermittel einhäust, wobei die Verdrängermittel um eine Achse des Gefäßes schwenkbar sind. Die Verdrängermittel weisen Federkopplungen zu dem Gefäß und erste elektrische Mittel auf, wobei die ersten elektrischen Mittel die Bewegung der Verdrängermittel steuern. Die Verdrängermittel sind als Schaufeln ausgebildet.

DE 10 2007 054 321 A1 offenbart eine Kolbenmaschine, in deren Gehäuse vier Kolben angeordnet sind. Die Kolben sind über Führungsglieder an Steuerkurven eines Kurvengliedes geführt, wobei das Kurvenglied um eine Drehachse drehbar in dem Gehäuse gelagert ist, während die Kolben nicht um die Drehachse drehbar sind. Beim Rotieren des Kurvengliedes führen die Kolben hin- und hergehende Bewegungen in einer bezüglich der Drehachse festen Bewegungsebene aus. Jeweils zwei Kolben sind elastisch, beispielsweise über eine Zugfeder, miteinander verbunden.

Der Erfindung liegt die Aufgabe zugrunde, ein Aggregat der eingangs genannten Art dahingehend weiterzubilden, dass das Aggregat insbesondere in Richtung der Drehachse des Rotors des elektromotorischen Teils kurz baut.

Erfindungsgemäß wird diese Aufgabe hinsichtlich des eingangs genannten Aggregats dadurch gelöst, dass der Rotor den kolbenmotorischen Teil umgibt, und dass der erste Kolben und der dritte Kolben starr miteinander verbunden sind, und dass der zweite Kolben und der vierte Kolben starr miteinander verbunden sind, so dass die Arbeitskammer und die weitere Arbeitskammer sich gegensinnig verkleinern und vergrößern.

Das erfindungsgemäße Aggregat weist somit eine Bauweise auf, bei der anstelle einer Reihenanordnung aus elektromotorischem Teil und kolbenmotorischem Teil eine ineinandergeschachtelte Anordnung aus innen liegendem kolbenmotorischen Teil und außen liegendem elektromotorischen Teil vorgesehen ist, wobei weiterhin sowohl der kolbenmotorische Teil als auch der elektromotorische Teil in einem gemeinsamen Gehäuse untergebracht sind. Das erfindungsgemäße Aggregat baut somit in Richtung der Drehachse des Rotors axial wesentlich kürzer als das bekannte Aggregat.

In dem Gehäuse sind ein dritter Kolben mit einer dritten Endfläche und ein vierter Kolben mit einer vierten Endfläche angeordnet, wobei der dritte Kolben und der vierte Kolben hin- und hergehende Bewegungen ausführen, wobei zwischen der dritten Endfläche und der vierten Endfläche eine weitere Arbeitskammer für ein Fluid vorhanden ist, die sich aufgrund der hin- und hergehenden Bewegungen des dritten und vierten Kolbens periodisch verkleinert und vergrößert.

Das erfindungsgemäße Aggregat besitzt somit ebenso viele Kolben wie der bekannte Hybridmotor, allerdings in deutlich axial kürzer bauender Bauweise, da der durch die vier Kolben gebildete kolbenmotorische Teil im Innern des elektromotorischen Teils von diesem umgeben angeordnet ist.

Dabei sind der erste Kolben und der dritte Kolben starr miteinander verbunden, und der zweite Kolben und der vierte Kolben sind starr miteinander verbunden, so dass die Arbeitskammer und die weitere Arbeitskammer sich gegensinnig verkleinern und vergrößern.

In dieser Ausgestaltung bilden der erste Kolben und der dritte Kolben somit einen Doppelkolben, und ebenso bilden der zweite Kolben und der vierte Kolben einen Doppelkolben.

Gegenüber einer Ausgestaltung der vier Kolben als Einzelkolben hat diese Maßnahme den Vorteil, dass zwischen dem ersten und dem dritten Kolben bzw. dem zweiten und dem vierten Kolben ein gegenseitiger Schlepp- oder Mitnahmeeffekt bei der hin- und hergehenden Bewegung besteht.

Im Fall, dass das erfindungsgemäße Aggregat als Hybridmotor ausgestaltet ist, ist der kolbenmotorische Teil als Verbrennungsmotor ausgestaltet, wobei in der Arbeitskammer zwischen den beiden Endflächen der beiden Kolben ein Carnot-Kreisprozess zum Einlassen und Verdichten eines Brennstoff-Luft-Gemisches und zum Expandieren und Ausstoßen des verbrannten Brennstoff-Luft-Gemisches stattfindet. Der elektromotorische Teil dieses Hybridmotors kann dabei, wie später noch beschrieben wird, als elektromotorischer Antrieb für ein Fahrzeug bei stehendem Verbrennungsmotor oder bei laufendem Verbrennungsmotor als Stromgenerator dienen.

In der Ausgestaltung als Hybridmotor lässt sich das erfindungsgemäße Aggregat in einem Kraftfahrzeug einsetzen.

In einer weiteren vorteilhaften Verwendung wird das erfindungsgemäße Aggregat in der Ausgestaltung als Hybridmotor in einer Windkraftanlage eingesetzt, um gleichzeitig oder wechselweise elektrische Energie und Druckluft zu erzeugen, wobei bei dieser Anwendung der kolbenmotorische Teil als Kompressor arbeitet.

Im Fall, dass das Aggregat nur als Stromgenerator ausgestaltet ist, ist der kolbenmotorische Teil als Verbrennungsmotor ausgestaltet und dient zum Antreiben des elektromotorischen Teils, der dann elektrische Energie erzeugt, die von dem Aggregat über ein Kabel abgegriffen werden kann, um damit beispielsweise in einem Fahrzeug einen Elektromotor zu speisen oder die Batterien für den Elektromotor zu laden. Ein solches Aggregat wird auch als "Range-Extender" bezeichnet, der dazu dient, die Reichweite eines mit Elektromotor ausgestatteten Fahrzeugs durch Hinzuschalten des Verbrennungsmotors mit elektrischer Energie zu verlängern. Der elektromotorische Teil dient außerdem zum Starten des Verbrennungsmotors, d.h. als Anlasser, was ebenso für den zuvor genannten Fall der Ausgestaltung des Aggregats als Hybridmotor gilt.

Neben der vorstehend genannten Verwendung des erfindungsgemäßen Aggregats als Stromgenerator in einem Kraftfahrzeug lässt sich das erfindungsgemäße Aggregat auch zur Energieversorgung in einem Gebäude verwenden. In diesem Fall wird der kolbenmotorische Teil dazu genutzt, über den elektromotorischen Teil Strom zu erzeugen, der das Gebäude mit Strom versorgt, während die Abwärme des kolbenmotorischen Teils zum Heizen des Gebäudes genutzt wird. In Verbindung mit elektrischen und thermischen Solarzellen bzw. -kollektoren kann somit mittels des erfindungsgemäßen Aggregats eine Energie-Vollversorgung eines Gebäudes realisiert werden.

Im Fall, dass das erfindungsgemäße Aggregat als Kompressor ausgebildet ist, dient der elektromotorische Teil zum Antreiben des kolbenmotorischen Teils, wobei dann der kolbenmotorische Teil nicht als Verbrennungsmotor ausgestaltet ist, sondern als Verdichter, wobei in der Arbeitskammer ein Arbeitsmedium, beispielsweise angesaugte Luft, verdichtet und als Druckmedium dann ausgestoßen wird.

In einer Variante gemäß Anspruch 1 können der erste Kolben und der zumindest eine zweite Kolben gemeinsam um die Drehachse umlaufen, und die hin- und hergehenden Bewegungen der Kolben sind aus der Umlaufbewegung um die Drehachse abgeleitet, wobei der erste und der zumindest eine zweite Kolben in einem Kolbenkäfig angeordnet sind, der mit den Kolben gemeinsam um die Drehachse um läuft, und wobei der Rotor mit dem Kolbenkäfig drehfest verbunden oder drehfest koppelbar ist.

In der einfacheren Ausgestaltung, bei der der Rotor des elektromotorischen Teils mit dem Kolbenkäfig drehfest verbunden ist, eignet sich das Aggregat insbesondere als reiner Stromgenerator, wobei sowohl zum Anlassen des als Verbrennungsmotor ausgebildeten kolbenmotorischen Teils als auch zum Antreiben des elektromotorischen Teils bei laufendem Verbrennungsmotor stets eine feste Kopplung zwischen dem Rotor des elektromotorischen Teils und dem Kolbenkäfig des kolbenmotorischen Teils besteht.

In der alternativen Ausgestaltung, bei der der Rotor des elektromotorischen Teils mit dem Kolbenkäfig drehfest koppelbar ist, eignet sich das Aggregat vorteilhafterweise als Hybridmotor, weil mit dem Aggregat wahlweise Antriebsenergie für ein Fahrzeug über den als Verbrennungsmotor ausgestalteten kolbenmotorischen Teil oder durch den dann als Elektromotor fungierenden elektromotorischen Teil unabhängig voneinander bereitgestellt werden kann. Außerdem dient der elektromotorische Teil als Anlasser für den kolbenmotorischen Teil.

Im Zusammenhang mit der vorstehend genannten Ausgestaltung, wonach der Rotor mit dem Kolbenkäfig drehfest koppelbar ist, ist der Rotor mit dem Kolbenkäfig vorzugsweise über eine Kupplung drehfest koppelbar, wobei bei geöffneter Kupplung der Rotor von dem Kolbenkäfig entkoppelt ist. Diese Ausgestaltung eignet sich vorteilhafterweise für die Verwendung des Aggregats als Hybridmotor.

Eine solche Kupplung ist vorzugsweise als hydraulische Kupplung ausgestaltet.

Dabei ist es des Weiteren bevorzugt, wenn der Rotor mit einer Abtriebswelle verbunden ist.

Auch diese Ausgestaltung ist für die Ausgestaltung des Aggregats als Hybridmotor vorteilhaft, da Rotationsenergie des Rotors vom elektromotorischen Teil zum Antreiben eines Fahrzeugs abgegriffen werden kann. Wenn die zuvor genannte Kupplung zwischen dem Rotor und dem Kolbenkäfig geschlossen ist und die Antriebsenergie zum Antreiben eines Fahrzeugs von dem als Verbrennungsmotor ausgestalteten kolbenmotorischen Teil bereitgestellt wird, dient die gleiche Abtriebswelle zum Abgreifen der Rotation des Kolbenkäfigs um die Drehachse als Antriebsenergie, während der Rotor des elektrischen Motors mitläuft und der elektromotorische Teil dann in der Art einer Lichtmaschine als Stromgenerator zum Erzeugen elektrischer Energie, beispielsweise zum Laden der Fahrzeugbatterie, mitläuft.

In einer weiteren bevorzugten Ausgestaltung ist die hin- und hergehende Bewegung der Kolben aus ihrer Umlaufbewegung durch ein Kurvenglied abgeleitet, das eine Steuerkurve aufweist und den ersten und den zumindest einen zweiten Kolben ringförmig umgibt und nicht mit dem Kolbenkäfig um die Drehachse umläuft, wobei der erste Kolben und der zumindest eine zweite Kolben jeweils zumindest ein Lauforgan aufweisen, die beim Umlaufen der Kolben um die Drehachse entlang der Steuerkurve geführt sind.

Alternativ zu der Variante des Aggregats gemäß Anspruch 1, bei der die Ableitung der hin- und hergehenden Bewegungen der Kolben aus der Umlaufbewegung der Kolben um die Drehachse erfolgt, ist es in einer weiteren Variante gemäß Anspruch 7 vorgesehen, dass der erste Kolben und der zumindest eine zweite Kolben nicht um die Drehachse umlaufen, wobei die hin- und hergehenden Bewegungen der Kolben aus der Umlaufbewegung eines Kurvengliedes um die Drehachse abgeleitet sind, das eine Steuerkurve aufweist und den zumindest einen zweiten Kolben ringförmig umgibt, und wobei der Rotor mit dem Kurvenglied drehfest verbunden oder drehfest koppelbar ist.

Beide vorstehend genannten Varianten lassen sich durch die erfindungsgemäße Ausgestaltung des Aggregats mit radial ineinandergeschachteltem elektromotorischen Teil und kolbenmotorischen Teil auf konstruktiv einfache Weise realisieren.

In beiden zuvor genannten Ausgestaltungen ist es weiterhin bevorzugt, wenn das jeweilige Lauforgan als Kugel ausgebildet ist, die in einer jeweiligen Kugelpfanne an einer jeweiligen, von der ersten bzw. zweiten Endfläche abgewandten Rückseite des ersten und zumindest einen zweiten Kolbens frei drehbar gelagert ist.

Die Geometrie der Anordnung aus Lauforgan, Kugelpfanne an der Rückseite des zugehörigen Kolbens, und Steuerkurve des Kurvengliedes ist dabei vorzugsweise so gewählt, dass die Kugeln beim Entlanglaufen entlang der Steuerkurve nicht auf Scherkräfte beansprucht werden, indem die Kraftlinie zwischen Kolbenrückseite, Kugelpfanne und Steuerkurve möglichst senkrecht zum Kugelpfannenboden des zugehörigen Kolbens und mittig durch die Kugel hindurch verläuft. Dadurch kann die jeweilige Kugel an der Steuerkurve und in der Kugelpfanne mittig anliegend abrollen.

In einer weiteren bevorzugten Ausgestaltung sind die hin- und hergehenden Bewegungen des ersten und zweiten Kolbens Schwenkbewegungen um eine Schwenkachse und der erste Kolben und der zumindest eine zweite Kolben sind an der Schwenkachse gehalten und gelagert.

Diese Maßnahme hat den Vorteil, dass die Gleitreibung der Kolben und damit die Wärmeentwicklung aufgrund der hin- und hergehenden Bewegungen der Kolben reduziert werden kann. Dies ist insbesondere dann von Vorteil, wenn die Kolben nicht nur die hin- und hergehenden Bewegungen ausführen, sondern gleichzeitig um die Drehachse umlaufen, wodurch in diesem Fall besonders bei hohen Drehzahlen auftretende größere Fliehkräfte die Gleitreibung der Kolben nicht erhöhen.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1: ein erstes Ausführungsbeispiel eines Aggregats in einer Ausgestaltung als Stromgenerator in einer perspektivischen Ansicht mit geschlossenem Gehäuse;
- Fig. 2: das Aggregat in Fig. 1 in einem Längsschnitt entlang einer Ebene, die eine Drehachse eines Rotors eines elektromotorischen Teils des Aggregats beinhaltet, wobei Kolben eines kolbenmotorischen Teils des Aggregats in einer ersten Stellung gezeigt sind;
- Fig. 3: das Aggregat in Fig. 1 und 2, ebenfalls in einem Schnitt entlang einer Ebene, die die Drehachse des Rotors des elektromotorischen Teils beinhaltet, wobei die Kolben in einer weiteren Stellung gezeigt sind;
- Fig. 4: das Aggregat in Fig. 1 bis 3, ebenfalls in einem Schnitt entlang einer Ebene, die die Drehachse des Rotors des elektromotorischen Teils beinhaltet, wobei die Kolben in einer noch weiteren Stellung gezeigt sind;
- Fig. 5: eine schematische Darstellung eines Beispiels für den Einbau des Aggregats in Fig. 1 in ein Fahrwerk eines Fahrzeugs;
- Fig. 6: ein weiteres Ausführungsbeispiel eines Aggregats in einer Ausgestaltung als Hybridmotor, wobei Fig. 6 das Aggregat in einer perspektivischen Darstellung mit geschlossenem Gehäuse zeigt;
- Fig. 7: das Aggregat in Fig. 6 in einem Schnitt entlang einer Ebene, die eine Drehachse eines Rotors eines elektromotorischen Teils des Aggregats beinhaltet;
- Fig. 8: eine Einzelheit des Aggregats in Fig. 6 und 7 im Schnitt in einer ersten Betriebsstellung;
- Fig. 9: die Einzelheit in Fig. 8 in einer zweiten Betriebsstellung;
- Fig. 10: den Rotor des elektromotorischen Teils des Aggregats in Fig. 6 und 7 zusammen mit einer Antriebs-/Abtriebswelle in perspektivischer Darstellung;
- Fig. 10A: ein Schema eines Beispiels für den Einbau des Aggregats in Fig. 6 und 7 in ein Fahrwerk eines Fahrzeugs;
- Fig. 11: ein drittes Ausführungsbeispiel eines Aggregats in einer Ausgestaltung als Kompressor in einer perspektivischen Darstellung mit geschlossenem Gehäuse;
- Fig. 12: das Aggregat in Fig. 11 in einem Schnitt entlang einer Ebene, die eine Drehachse eines Rotors eines elektromotorischen Teils des Aggregats beinhaltet, wobei Kolben eines kolbenmotorischen Teils des Aggregats in einer ersten Stellung gezeigt sind;
- Fig. 13: das Aggregat in Fig. 11 und 12 in einem Schnitt entlang einer Ebene, die die Drehachse des Rotors des elektromotorischen Teils beinhaltet, wobei die Kolben in einer zweiten Stellung gezeigt sind;
- Fig. 14: das Aggregat in Fig. 11 bis 13 in einem Schnitt entlang einer Ebene, die die Drehachse des Rotors des elektromotorischen Teils beinhaltet, wobei die Kolben in einer dritten Stellung gezeigt sind;
- Fig. 15: ein weiteres Ausführungsbeispiel eines kolbenmotorischen Teils als Alternative zu den kolbenmotorischen Teilen der Aggregate in Fig. 1, 6 und 11, wobei Fig. 15 den kolbenmotorischen Teil mit einer abgenommenen ersten Hälfte eines Kolbenkäfigs des kolbenmotorischen Teils zeigt;
- Fig. 16: den kolbenmotorischen Teil in Fig. 15, wobei eine zweite Hälfte des Kolbenkäfigs des kolbenmotorischen Teils abgenommen ist; und
- Fig. 17: den kolbenmotorischen Teil in Fig. 15 und 16, wobei beide Hälften des Kolbenkäfigs des kolbenmotorischen Teils zusammengefügt gezeigt sind.

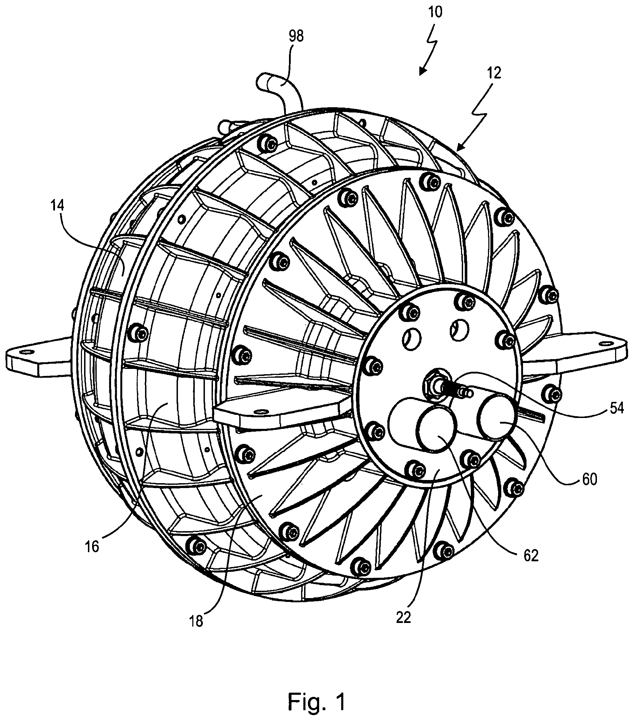

In Fig. 1 bis 4 ist ein erstes Ausführungsbeispiel eines Aggregats 10 dargestellt. Das Aggregat 10 ist in diesem Ausführungsbeispiel als Stromgenerator ausgestaltet und kann, wie später *noch* beschrieben wird, in einem Fahrzeugantrieb als sogenannter "Range-Extender" verwendet werden.

Das Aggregat 10 weist ein Gehäuse 12 auf, das zwei zylindrische Gehäuseteile 14 und 16, zwei Bodenteile 18 und 20 sowie zwei Stirndeckel 22 und 24 aufweist.

In dem Gehäuse 12 ist ein elektromotorischer Teil 26 und ein kolbenmotorischer Teil 28 angeordnet.

Zunächst wird der kolbenmotorische Teil 28 näher beschrieben.

Der kolbenmotorische Teil 28 weist insgesamt vier Kolben auf, und zwar einen ersten Kolben 30, einen zweiten Kolben 32, einen dritten Kolben 34 und einen vierten Kolben 36.

Der erste Kolben 30 und der zweite Kolben 32 weisen eine erste Endfläche 38 bzw. eine zweite Endfläche 40 auf, die zwischen sich eine erste Arbeitskammer 42 für ein Arbeitsmedium bilden.

Entsprechend weisen der dritte Kolben 34 und der vierte Kolben 36 eine dritte Endfläche 44 bzw. eine vierte Endfläche 46 auf, zwischen denen eine zweite Arbeitskammer 48 für ein Arbeitsmedium vorhanden ist.

Der erste Kolben 30 und der zweite Kolben 32 führen im Betrieb des kolbenmotorischen Teils 28 hin- und hergehende, zueinander gegensinnige Bewegungen aus, wobei diese Bewegungen als Schwenkbewegungen um eine Schwenkachse 50 ausgeführt werden. Entsprechend führen die Kolben 34 und 36 zueinander gegensinnige, hin- und hergehende Bewegungen, hier ebenfalls Schwenkbewegungen, um dieselbe Schwenkachse 50 aus.

Der erste Kolben 30 ist mit dem dritten Kolben 34 verbunden, und zwar starr verbunden, und ebenso sind der zweite Kolben 32 und der vierte Kolben 36 miteinander verbunden, und zwar ebenfalls starr miteinander verbunden.

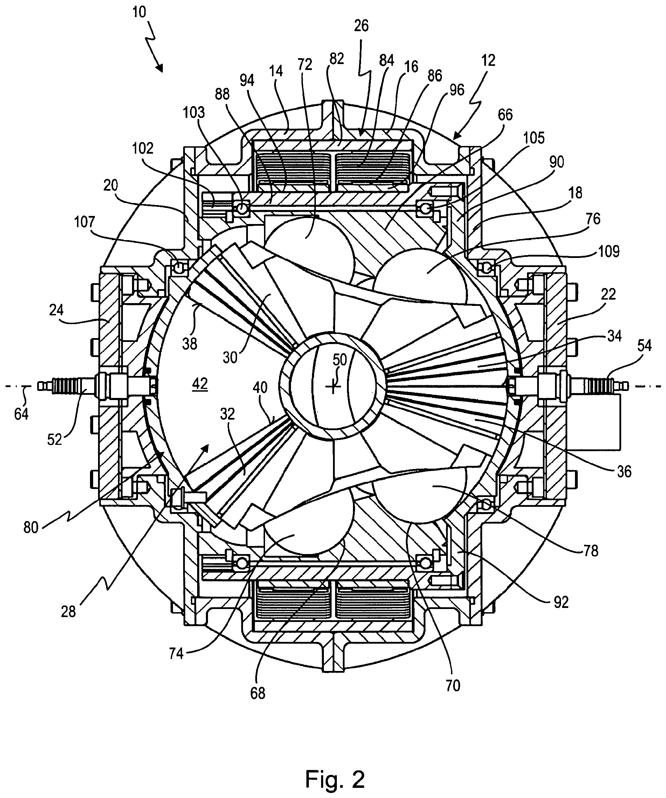

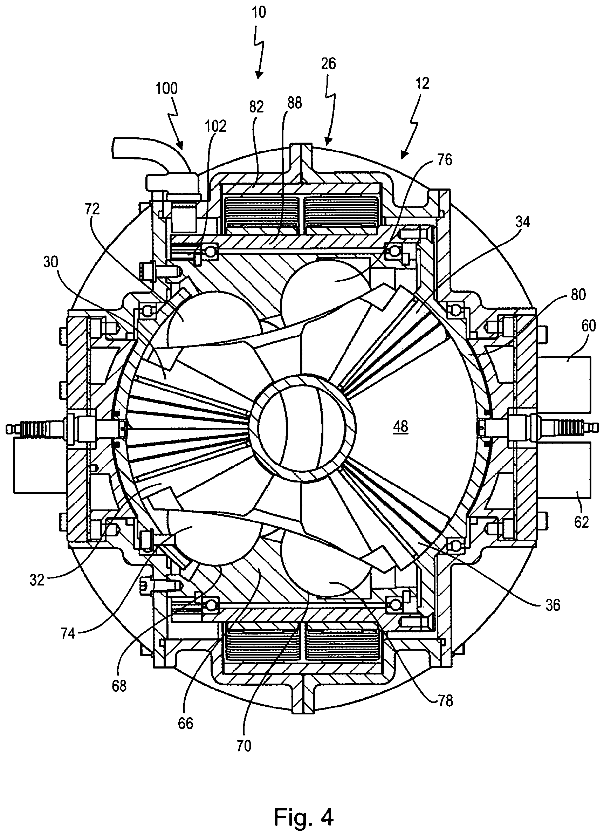

Dies hat zur Folge, dass während sich die Arbeitskammer 42 im Volumen vergrößert, verkleinert sich die zweite Arbeitskammer 48, und umgekehrt. In Fig. 2 ist die erste Arbeitskammer 42 mit maximalem Volumen dargestellt, während die zweite Arbeitskammer 48 ihr minimales Volumen einnimmt, und in Fig. 4 ist der umgekehrte Fall dargestellt, d.h. in der Stellung der Kolben 30 bis 36 in Fig. 4 nimmt die zweite Arbeitskammer 48 ihr maximales Volumen ein, während die erste Arbeitskammer 42 ihr minimales Volumen einnimmt.

Bei dem Aggregat 10 ist der kolbenmotorische Teil 28 als Verbrennungsmotor ausgebildet. In den Arbeitskammern 42 und 48 findet somit jeweils ein Carnot-Kreisprozess des Einlassens und Verdichtens eines Brennstoff-Luft-Gemisches und des Arbeitenlassens und Ausstoßens des verbrannten Brennstoff-Luft-Gemisches statt. Entsprechend sind den Arbeitskammern 42 und 48 eine Zünd- oder Glühkerze 52 bzw. 54 zugeordnet. Weiterhin sind der ersten Arbeitskammer entsprechend ein Gaseinlass 56 für Frischluft und ein Gasauslass 58 für Abgas und selbstverständlich eine nicht näher dargestellte Düse zum Zuführen von Brennstoff zugeordnet. Der zweiten Arbeitskammer 58 sind entsprechend ein Gasauslass 60 und ein Gaseinlass 62 zugeordnet.

Im Betrieb des kolbenmotorischen Teils 28 laufen die Kolben 30 bis 36 in dem Gehäuse 12 um eine gehäusefeste Drehachse 64 um, wobei die hin- und hergehenden Bewegungen der Kolben 30 bis 36 aus dieser Umlaufbewegung um die Drehachse 64 abgeleitet sind.

Um die hin- und hergehenden Bewegungen der Kolben 30 bis 36 aus ihrer Umlaufbewegung um die Drehachse 64 abzuleiten, weist der kolbenmotorische Teil 28 ein Kurvenglied 66 auf, das die Kolben 30 bis 36 ringförmig umgibt. Das Kurvenglied 66 weist zwei Steuerkurven auf, und zwar eine erste Steuerkurve 68 und eine zweite Steuerkurve 70, die in Umfangsrichtung um die Drehachse 64 eine entsprechende Konturierung zur Erzeugung der hin- und hergehenden Bewegungen der Kolben 30 bis 36 aufweisen, wie aus einem Vergleich der Fig. 2 bis 4 hervorgeht, die unterschiedliche Stellungen der Kolben 30 bis 36 zeigen.

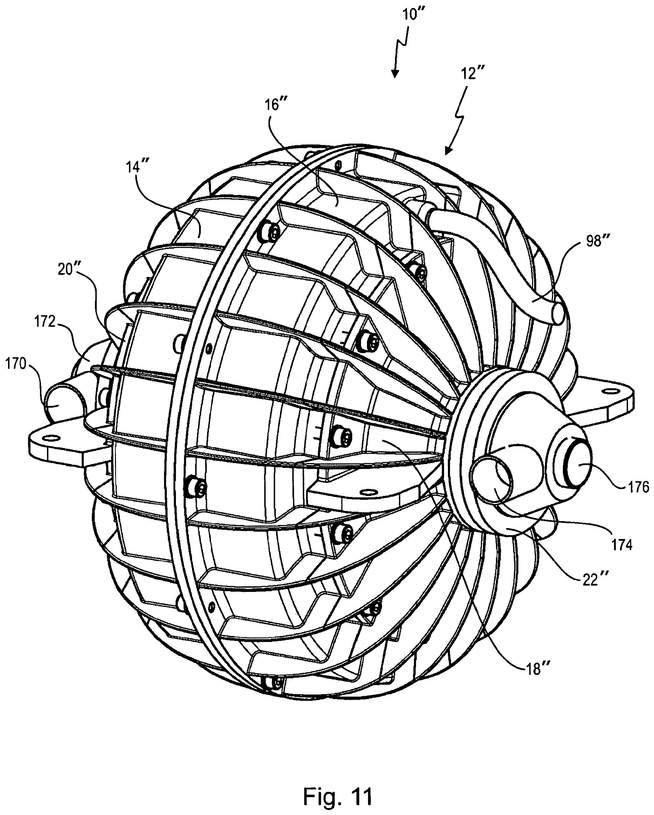

Jeder Kolben 30 bis 36 weist auf seiner der zugehörigen Endfläche 38 bis 46 abgewandten Rückseite ein Lauforgan in Form einer jeweiligen Kugel 72 (Kolben 30), 74 (Kolben 32), 76 (Kolben 34) und 78 (Kolben 36) auf (siehe jedoch Fig. 11 bis 14). Die Kugeln 72 bis 78 sind in entsprechenden, nicht näher dargestellten Kugelpfannen, die jeder der Kolben 30 bis 36 aufweist, frei drehbar angeordnet. Beim Umlaufen der Kolben 30 bis 36 um die Drehachse 34 laufen die Kugeln 72 bis 78 entlang der Steuerkurven 68 bis 70 und erzeugen dabei die hin- und hergehenden Bewegungen der Kolben 30 bis 36 bezüglich der Schwenkachse 50. Die Schwenkachse 50, die hier als geometrische Achse ebenso wie die Drehachse 64 zu verstehen ist, läuft dabei ebenfalls um die Drehachse 64 um.

Für ein leichteres Verständnis der Zeichnung sind die Kolben 30 bis 36 in Fig. 2 bis 4 jeweils in der Zeichenebene dargestellt und das Gehäuse 12 jeweils in verschiedenen Drehstellungen bezüglich der Drehachse 64 dargestellt. Es versteht sich jedoch, dass nicht das Gehäuse 12 um die Drehachse 64 umläuft, sondern die Kolben 30 bis 36.

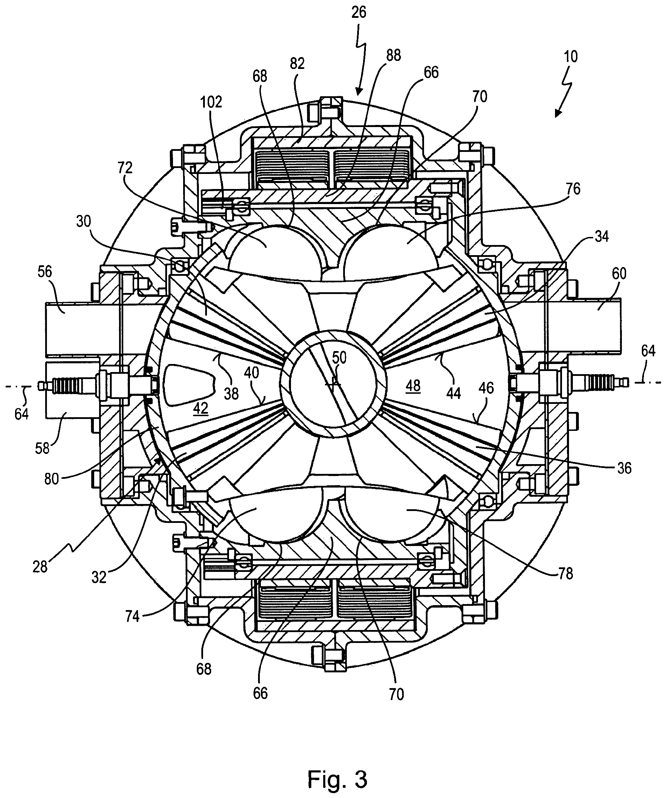

Wie bereits erwähnt, zeigt Fig. 2 eine Stellung der Kolben 30 bis 36, in der die Arbeitskammer 42 ihr maximales Volumen (OT-Stellung der Kolben 30 und 32) einnimmt, während die zweite Arbeitskammer 48 ihr minimales Volumen einnimmt (UT-Stellung der Kolben 34 und 36), während in Fig. 3 eine Stellung der Kolben 30 bis 36 gezeigt ist, in der sich die Kolben 30 und 32 ausgehend von Fig. 2 aufeinander zu bewegt und die Kolben 34 und 36 voneinander weg bewegt haben, und wobei Fig. 4 die Stellung der Kolben 30 bis 36 zeigt, in der die erste Arbeitskammer 42 nun ihr minimales Volumen und die zweite Arbeitskammer 48 ihr maximales Volumen einnimmt.

Der kolbenmotorische Teil 28 weist weiterhin einen Kolbenkäfig 80 auf, in dem die Kolben 30 bis 36 gleitend gelagert sind, damit sie ihre hin- und hergehenden Bewegungen bezüglich der Schwenkachse 50 ausführen können, und der zusammen mit den Kolben 30 bis 36 um die Drehachse 64 in dem Gehäuse umläuft.

Nachfolgend wird nun der elektromotorische Teil 26 des Aggregats 10 näher beschrieben.

Der elektromotorische Teil 26 weist einen Stator 82 mit Wicklungen 84 und Magnetkernen 86 auf. Der Stator 82 mit den Wicklungen 84 und dem Magnetkern 86 ist in dem Gehäuse 12 gehäusefest angeordnet.

Der elektromotorische Teil 26 weist weiterhin einen Rotor 88 auf, der in dem Gehäuse 12 um die Drehachse 64 gemeinsam mit dem Kolbenkäfig 80 und den Kolben 30 bis 36 umläuft, wenn der kolbenmotorische Teil 28 des Aggregats 10 in Betrieb ist.

Dabei umgibt der Rotor 88 den kolbenmotorischen Teil 28 ringförmig, wodurch der kolbenmotorische Teil 28 innerhalb des Rotors 88 des elektromotorischen Teils 26 angeordnet ist.

Der Rotor 88 ist dabei drehfest mit dem Kolbenkäfig 80 verbunden, und zwar über in Bezug auf die Drehachse 64 radiale Fortsätze 90 und 92, die auf der axialen Seite des Bodenteils 18 am Kolbenkäfig 80 vorhanden sind.

Der Rotor 88 und der Kolbenkäfig 80 bilden somit zusammen eine Einheit, die um die Drehachse 64 im Betrieb des Aggregats 10 umläuft.

Der Rotor 88 weist radial außenseitig Magnetringe 96 auf, die jeweils eine Anzahl an einzelnen Magneten tragen und entsprechend mit den Magnetkernen 86 des Stators 82 zusammenwirken.

Zum Anlassen des als Verbrennungsmotor ausgestalteten kolbenmotorischen Teils 28 wird der elektromotorische Teil 26 von extern mit elektrischer Energie versorgt (Kabel 98), um den Rotor 88 in Rotation um die Drehachse 64 zu versetzen. Diese Rotation startet dann den Verbrennungsmotor (kolbenmotorischer Teil 28), und nachdem der Verbrennungsmotor gestartet ist, dient der elektromotorische Teil 26 dann als Generator zum Bereitstellen von elektrischer Energie.

Gemäß Fig. 1 ist das Aggregat 10 entsprechend mit einem Kabel 98 ausgestattet, über das die elektrische Energie vom elektromotorischen Teil 26 abgegriffen wird.

Der Rotor 88 weist weiterhin einen Steuerungssensor 100 (siehe Fig. 4) auf, der mit einem "60-2"-Zähne-Steuerrad 102 für das Motormanagement des kolbenmotorischen Teils 28 zusammenwirkt.

Der Rotor 88 ist ferner über Ringkugellager 103 und 105 am Kurvenglied 66 gelagert, und der Kolbenkäfig 80 ist über Ringkugellager 107 und 109 am Gehäuse 12 gelagert.

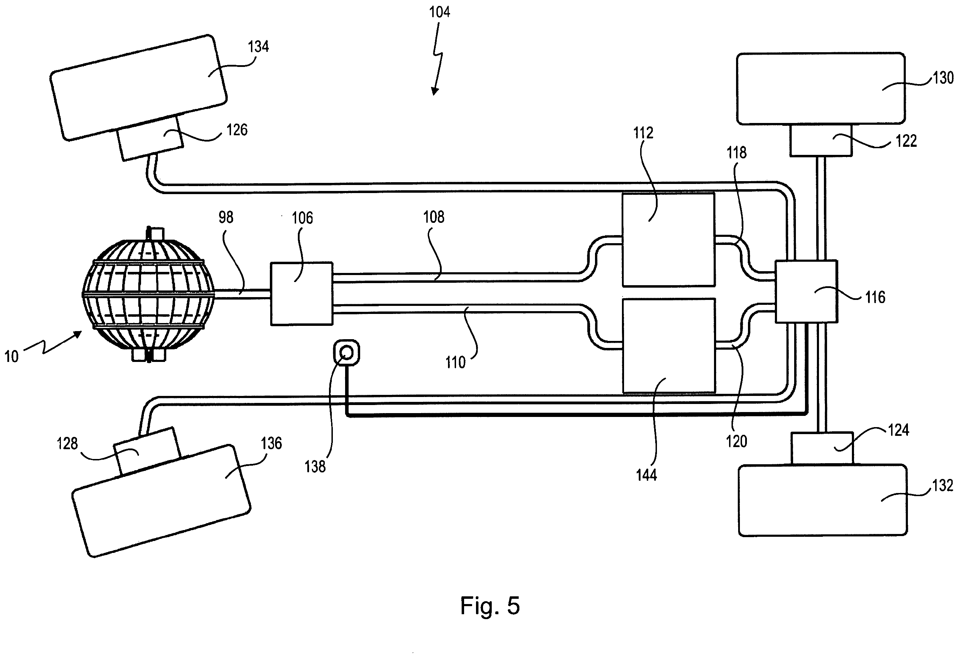

In Fig. 5 ist die Einbaulage des Aggregats 10 in einem Fahrwerk 104 eines Fahrzeuges gezeigt. Das Aggregat ist über das Kabel 98 mit einem ersten Regler 106 verbunden, der wiederum über Kabel 108, 110 mit Akkumulatoren 112, 114 verbunden ist. Die Akkumulatoren 112 und 114 stehen mit einem zweiten Regler 116 über Kabel 118, 120 in Verbindung, wobei der zweite Regler 116 mit Radnabenmotoren 122, 124, 126, 128 zum Antreiben von Rädern 130, 132, 134, 136 verbunden ist. Das Aggregat 10 dient dazu, die Akkumulatoren 112, 114 zu laden, um die Betriebsdauer der Radnabenmotoren 122 bis 128 zu erhöhen. Das Aggregat 10 dient somit in diesem Fall als "Range-Extender", d.h. als Reichweitenverlängerer.

Über ein Bedienelement 138 im Fahrgastraum des Fahrzeuges, das auf den zweiten Regler 116 wirkt, kann das Aggregat 10 nach Bedarf zugeschaltet werden.

Eine weitere interessante Verwendung des Aggregats 10 besteht darin, mit dem Aggregat 10, ggf. in Verbindung mit elektrischen und thermischen Solarzellen bzw. -kollektoren eine Energie-Vollversorgung eines Gebäudes zu realisieren. In diesem Fall wird der kolbenmotorische Teil 28 mit einem Brennstoff befeuert, um den elektromotorischen Teil 26 anzutreiben, der wiederum elektrische Energie für die Gebäudeversorgung herstellt. Dabei kann außerdem die Abwärme des kolbenmotorischen Teils 28 zu Heizzwecken genutzt werden. Dabei kann die elektrische Energie zum Anlassen des als Verbrennungsmotor ausgestalteten kolbenmotorischen Teils 28 beispielsweise über die Stromversorgung mittels Solarzellen auf dem Dach des Gebäudes bereitgestellt werden.

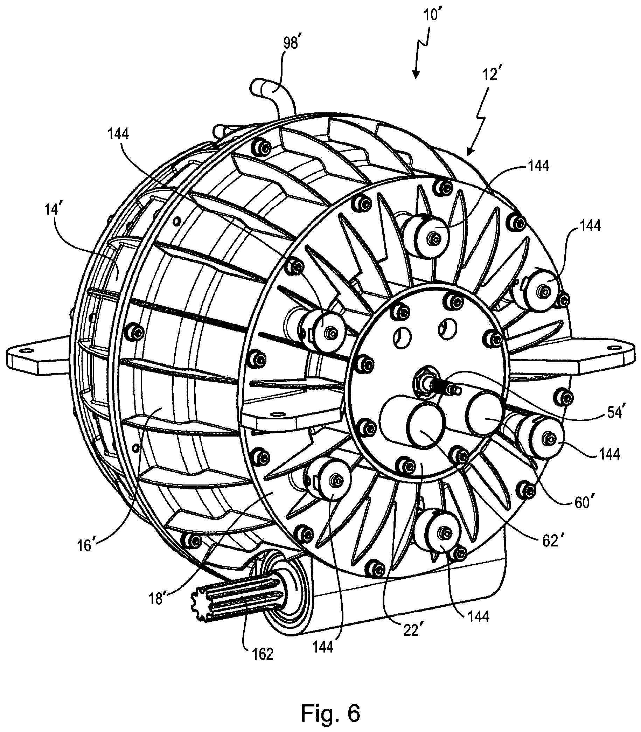

Mit Bezug auf Fig. 6 bis 10 wird nachfolgend ein weiteres Ausführungsbeispiel eines Aggregats 10' beschrieben, wobei das Aggregat 10' in Abwandlung des Aggregats 10 als Hybridmotor ausgestaltet ist.

Nachfolgend werden diejenigen Teile des Aggregats 10', die mit entsprechenden Teilen des Aggregats 10 identisch oder zu diesen ähnlich sind, mit den gleichen Bezugszeichen versehen wie die Teile des Aggregats 10, ergänzt durch einen '.

Soweit nachfolgend nichts Gegenteiliges beschrieben ist, gilt die Beschreibung des Aggregats 10 auch für das Aggregat 10'.

Das Aggregat 10' weist in einem Gehäuse 12' einen elektromotorischen Teil 26' und einen kolbenmotorischen Teil 28' auf.

Der kolbenmotorische Teil 28' weist vier Kolben 30', 32', 34' und 36' auf, deren Ausgestaltung den Kolben 30, 32, 34 und 36 des Aggregats 10 entspricht.

Die Kolben 30' und 32' definieren eine erste Arbeitskammer 42', und die Kolben 34' und 36' definieren eine zweite Arbeitskammer 48'.

Die Kolben 30' und 32' führen in dem Gehäuse 12' hin- und hergehende Bewegungen, die wiederum als Schwenkbewegungen um eine Schwenkachse 50' ausgeführt sind, aus. Ebenso führen die Kolben 34' und 36' hin- und hergehende, zueinander gegensinnige Bewegungen, und zwar ebenfalls Schwenkbewegungen bezüglich der Schwenkachse 50', aus.

Die Kolben 30' bis 36' laufen in dem Gehäuse 12' um eine gehäusefeste Drehachse 64' um. Um die hin- und hergehenden Bewegungen der Kolben 30' bis 36' aus der Umlaufbewegung um die Drehachse 64' abzuleiten, weist der kolbenmotorische Teil 28' weiterhin ein Kurvenglied 66' mit zwei Steuerkurven 68' und 70' auf.

Die Kolben 30' und 32' sind in der Steuerkurve 68' mittels Lauforganen in Form von Kugeln 72' und 74' geführt, und die Kolben 34' und 36' sind mittels Lauforganen in Form von Kugeln 76' und 78' entlang der Steuerkurve 70' des Kurvenglieds 66' geführt.

Die Kolben 30' bis 36' sind in einem Kolbenkäfig 80' gleitend gelagert, wobei der Kolbenkäfig 80' zusammen mit den Kolben 30' bis 36' um die Drehachse 64' in dem Gehäuse 12' umläuft.

Der elektromotorische Teil 26' weist einen Stator 82' mit Wicklungen 84' und Magnetkernen 86' auf. Der Stator 82' ist im Gehäuse 12' unbeweglich angeordnet.

Der elektromotorische Teil 26' weist weiterhin einen Rotor 88' auf, der den kolbenmotorischen Teil 28' ringförmig umgibt.

Im Unterschied zu dem Aggregat 10 ist der Rotor 88' mit dem Kolbenkäfig 80' des kolbenmotorischen Teils 28' nicht permanent drehfest gekoppelt, sondern der Rotor 88' ist mit dem Kolbenkäfig 80' drehfest koppelbar.

Hierzu ist eine Kupplung 140 in dem Gehäuse 12' angeordnet, die als hydraulische Kupplung ausgebildet ist.

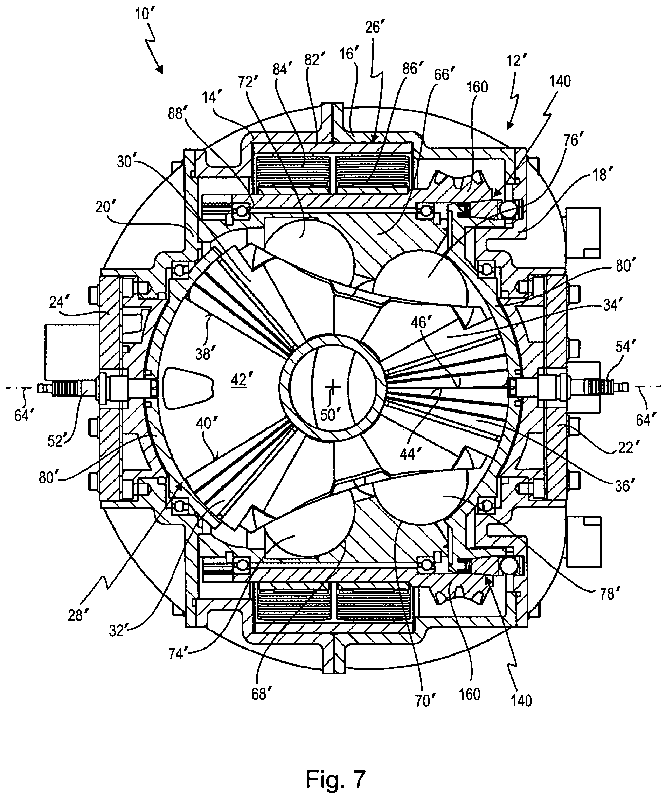

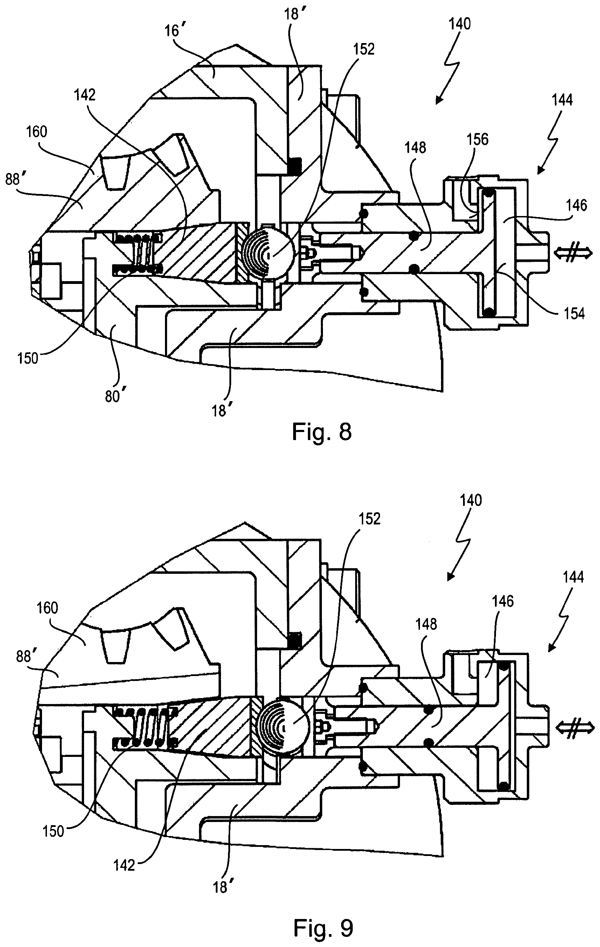

In Fig. 8 und 9 ist die Kupplung 140 in Alleinstellung und gegenüber Fig. 7 vergrößert dargestellt. Die Kupplung 140 weist einen konischen Kupplungsring 142 auf, der im geschlossenen Zustand der Kupplung 140 den Rotor 88' mit dem Kolbenkäfig 80' drehfest koppelt. Fig. 8 zeigt die geschlossene Stellung der Kupplung 140 und Fig. 9 die geöffnete Stellung der Kupplung 140, in der der Rotor 88' nicht drehfest mit dem Kolbenkäfig 80' gekoppelt ist.

Die Kupplung 140 weist in Umfangsrichtung um die Drehachse 64' verteilt mehrere, beispielsweise sechs (siehe Fig. 6), Hydraulikantriebe 144 mit einem Hydraulikzylinder 146 und einem Hydraulikkolben 148 auf.

Eine Druckfeder 150 spannt den Kupplungsring 142 in seine Offenstellung, die in Fig. 9 gezeigt ist, vor.

Der Kupplungsring 142 ist über ein Ring-Kugellager 152 in Drehrichtung um die Drehachse 64' an dem Gehäuse 12', genauer gesagt an dem Bodenteil 18', drehbar gelagert.

Durch Anlegen eines Hydraulikdruckes an eine Fläche 154 des Hydraulikkolbens 148 wirkt der Hydraulikkolben 148 auf den Kupplungsring 142 und bewegt diesen in die Schließstellung, so dass der Rotor 88' mit dem Kolbenkäfig 80' drehfest gekoppelt ist. Durch eine Beaufschlagung des Kolbens 148' mit Hydraulikdruck gegen eine der Fläche 154 entgegengesetzte Fläche 156 wird der Kolben 148 in Fig. 9 nach rechts bewegt, wodurch die Druckfeder 150 den Kupplungsring 142 aus seiner geschlossenen Stellung in seine Offenstellung bewegt, so dass der Rotor 88' mit dem Kolbenkäfig 80' nicht mehr drehfest gekoppelt ist.

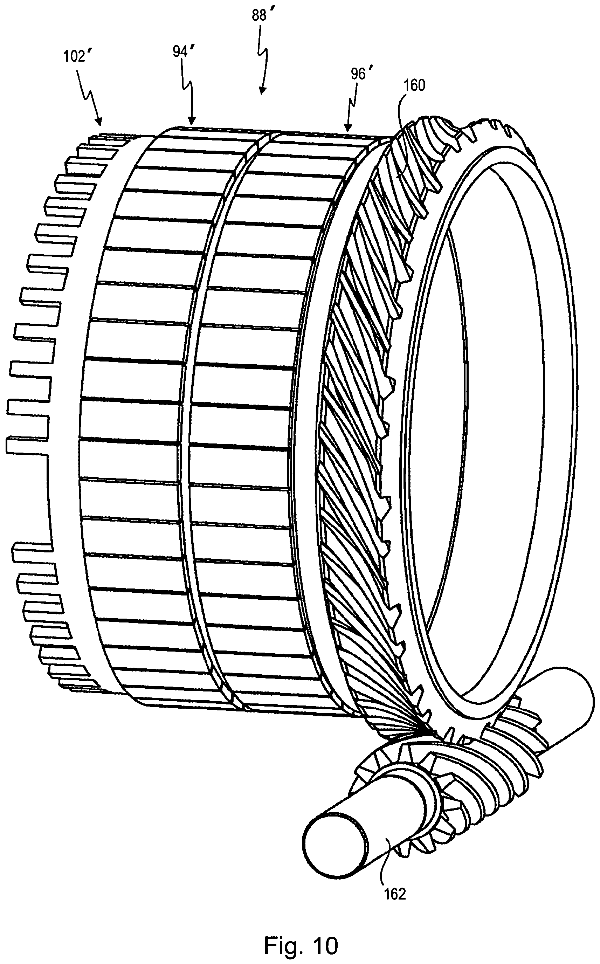

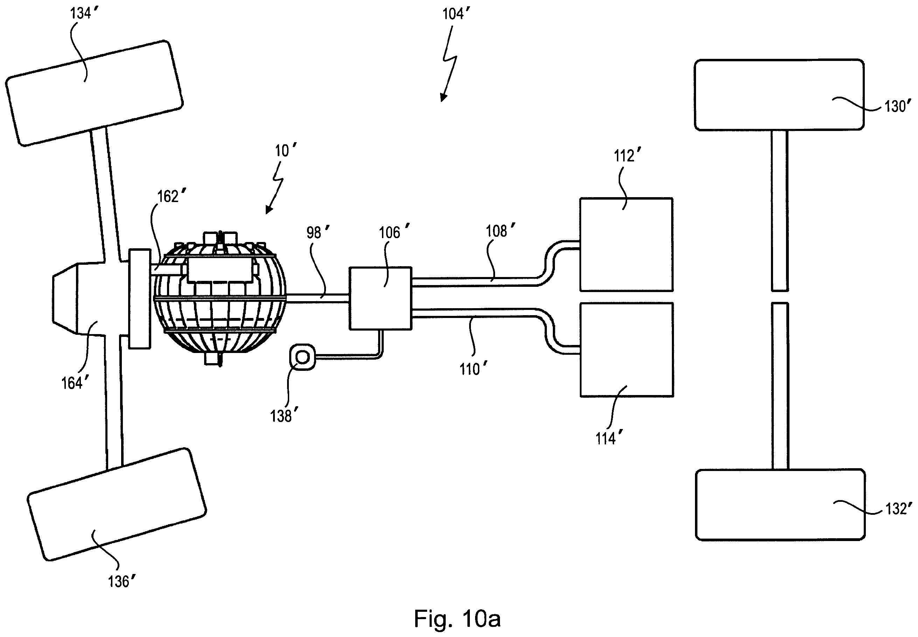

Gemäß einem weiteren Aspekt ist der Rotor 88' mit einem sich um die Drehachse 64' erstreckenden Zahnkranz 160 mit Schrägverzahnung versehen, wie insbesondere in Fig. 10 dargestellt ist, die den Rotor 88' mit den Magnetringen 94' und 96' zeigt. Außerdem zeigt Fig. 10 den "60-2"-Zahnkranz 102' des Steuersensors 100' für das Motormanagement des kolbenmotorischen Teils 28'.

Der Zahnkranz 160 des Rotors 88' kämmt mit einer Antriebs-/Abtriebswelle 162.

Bei geschlossener Kupplung 140 ist der Kolbenkäfig 80' somit mit der Antriebs-/Abtriebswelle 162 gekoppelt, so dass die Umlaufbewegung des Kolbenkäfigs 80' in eine Drehbewegung der Antriebs-/Abtriebswelle 162 umgesetzt wird.

Wenn das Aggregat 10' als Elektromotor arbeitet, ist die Kupplung 140 geöffnet, so dass dann nur der Rotor 88' mit der Antriebs-/Abtriebswelle 162 gekoppelt ist.

Bei geschlossener Kupplung 140 fungiert der elektromotorische Teil 26' als Stromgenerator zum Laden der Fahrzeugbatterien.

Fig. 10 zeigt ein Beispiel für eine Einbaulage des Aggregats 10' in einem Fahrwerk 104' eines Fahrzeugs. Das Aggregat 10' ist über die Antriebs-/Abtriebswelle 162 mit einem Getriebe 164 verbunden, um über das Getriebe 164 Räder 134' und 136' des Fahrzeugs anzutreiben. Andererseits ist das Aggregat 10' über ein Kabel 98' mit einem Regler 106' verbunden, wobei der Regler 106' mit Akkumulatoren 112' und 114' über Kabel 108' und 110' verbunden ist.

Das Aggregat 10', das als Hybridmotor ausgebildet ist, kann somit über den kolbenmotorischen Teil 28', der als Verbrennungsmotor ausgebildet ist, in herkömmlicher Weise die Räder 134' und 136' antreiben, und ebenso kann das Aggregat 10' als Elektromotor über den elektromotorischen Teil 26' über die Antriebs-/Abtriebswelle 162 ebenfalls die Räder 134' und 136' antreiben. Zum anderen können im Betrieb des Aggregats 10' als reiner Verbrennungsmotor über den elektromotorischen Teil 26' die Akkumulatoren 112' und 114', d.h. die Fahrzeugbatterien, geladen werden.

Über ein Bedienelement 138' sind die verschiedenen Betriebsarten des Aggregats 10' ein- bzw. zuschaltbar.

Neben der vorstehend beschriebenen Verwendung des Aggregats 10' in einem Kraftfahrzeug kann das Aggregat 10' auch zur gleichzeitigen oder wechselweisen Herstellung von elektrischer Energie und Druckluft verwendet werden, wobei dann der elektromotorische Teil 26' und der kolbenmotorische Teil 28' durch Windenergie angetrieben werden. In dieser Verwendung steht die Antriebs-/Abtriebswelle 162 mit einem Windrad mechanisch in Verbindung. Das Windrad treibt über die Antriebs-/Abtriebswelle 162 bei geschlossener Kupplung 140 den Kolbenkäfig 80' an, wodurch der kolbenmotorische Teil 28' im Sinne eines Kompressors Druckluft erzeugt. Gleichzeitig wird der Rotor 88' bei geschlossener Kupplung 140 in Rotation versetzt, so dass der elektromotorische Teil 26' Strom erzeugt. Der kolbenmotorische Teil 28' wird bei dieser Verwendung nicht befeuert, so dass Zündkerzen weggelassen werden.

Bei geöffneter Kupplung 140 wird über die Antriebs-/Abtriebswelle 162 nur der elektromotorische Teil 26' angetrieben, der dann Strom erzeugt, während der kolbenmotorische Teil 28' steht.

Mit Bezug auf Fig. 11 bis 14 wird nachfolgend ein weiteres Ausführungsbeispiel eines Aggregats 10" beschrieben, wobei das Aggregat 10" als Kompressor ausgestaltet ist.

Solche Teile des Aggregats 10", die mit entsprechenden Teilen des Aggregats 10 identisch oder vergleichbar sind, sind mit den gleichen Bezugszeichen wie die Teile des Aggregats 10, ergänzt durch " versehen.

Soweit nachfolgend nichts anderes beschrieben wird, gilt die Beschreibung des Aggregats 10 auch für das Aggregat 10".

Das Aggregat 10" weist in einem Gehäuse 12" einen elektromotorischen Teil 26" und einen kolbenmotorischen Teil 28" auf.

Nachfolgend wird der kolbenmotorische Teil 28" näher beschrieben.

Der kolbenmotorische Teil 28" weist insgesamt vier Kolben 30", 32", 34" und 36" auf. Die Kolben 30" und 34" sind starr miteinander verbunden und bilden einen ersten Doppelkolben, und die Kolben 32" und 36" sind ebenfalls fest miteinander verbunden und bilden einen zweiten Doppelkolben.

Die Kolben 30" und 32" führen in dem Gehäuse 12" hin- und hergehende, zueinander gegensinnige Bewegungen, die als Schwenkbewegungen um eine Schwenkachse 50" ausgeführt sind, aus. Ebenso führen die Kolben 34" und 36" hin- und hergehende, zueinander gegensinnige Bewegungen um die Schwenkachse 50" aus.

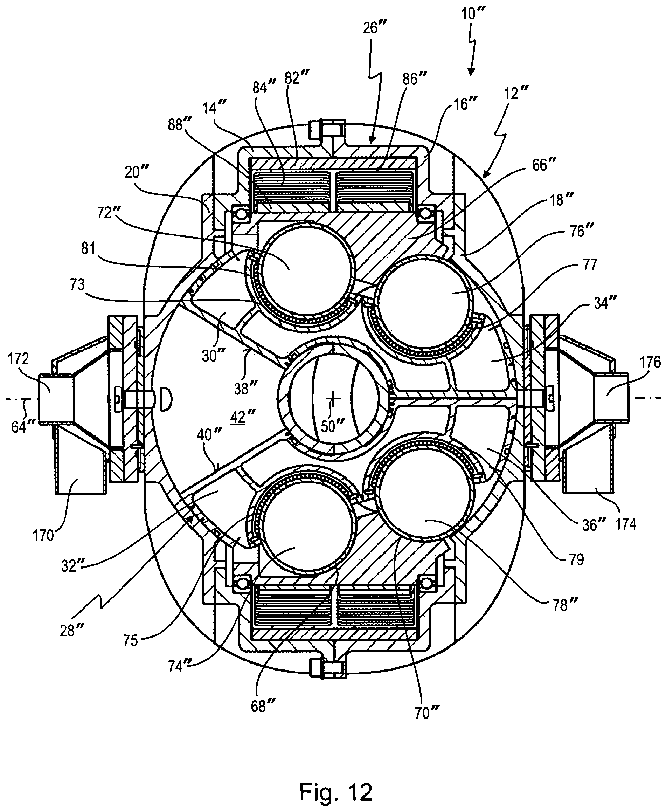

Im Unterschied zu dem Aggregat 10 und zu dem Aggregat 10' laufen die Kolben 30" bis 36" nicht um eine Drehachse 64" in dem Gehäuse um, sondern führen die vorstehend genannten hin- und hergehenden Bewegungen stets in einer selben Ebene, hier in der Zeichenebene in Fig. 12 bis 14 aus, so dass das Gehäuse 12" in Fig. 12 bis 14 stets in gleicher Orientierung dargestellt ist. Außerdem weist der kolbenmotorische Teil 28" keinen Kolbenkäfig auf, sondern die Kolben sind unmittelbar im Gehäuse 12" an dessen Innenwand anliegend angeordnet.

Die Kolben 30" und 32" definieren dabei eine Arbeitskammer 42", und die Kolben 34" und 36" definieren eine weitere Arbeitskammer 48".

In den Arbeitskammern 42" und 48" finden bei dem Aggregat 10" nicht die Takte eines Carnot-Kreisprozesses statt, sondern in den Arbeitskammern 42" wird ein Gas, beispielsweise Luft, angesaugt, dann verdichtet und als unter Druck stehendes Gas wieder ausgestoßen. Der kolbenmotorische Teil 28" arbeitet somit nicht als Verbrennungsmotor, sondern als Verdichter.

Entsprechend weist das Aggregat 10" der Arbeitskammer 42" zugeordnet einen Gaseinlass 170 und einen Druckgasauslass 172 auf. Der Arbeitskammer 48" ist ebenfalls ein Gaseinlass 174 und ein Druckgasauslass 176 zugeordnet. Für die Gaswechselsteuerung weisen die Gaseinlässe 170, 174 und die Druckgasauslässe 172 beispielsweise Flatterventile auf.

Der kolbenmotorische Teil 28" weist zur Erzeugung der hin- und hergehenden Bewegungen der Kolben 30" bis 36" ein Kurvenglied 66" auf, das zwei Steuerkurven 68" und 70" aufweist. Jedem der Kolben 30" bis 36" ist jeweils ein Lauforgan in Form einer Kugel 72", 74", 76" bzw. 78" zugeordnet, wobei die Kugeln 72" bis 78" als Hohlkugeln ausgebildet sind. Die Kugeln 72" bis 78" sind in entsprechenden, hier gezeigten Kugelpfannen 73 (Kolben 30"), 75 (Kolben 32"), 77 (Kolben 34") und 79 (Kolben 78") auf den Arbeitskammern 42" und 48" abgewandten Rückseiten der Kolben 30" bis 36" aufgenommen. Wie hier gezeigt, weisen die Kugelpfannen 73, 75, 77, 79 Kugellager auf, wobei das Kugellager der Kugelpfanne 73 in Fig. 12 mit dem Bezugszeichen 81 versehen ist.

Im Unterschied zu den Kurvengliedern 66 und 66' der Aggregate 10 und 10' ist das Kurvenglied 66" um die Drehachse 64" umlaufend ausgebildet. Durch Umlaufen des Kurvenglieds 66" um die Drehachse 64" werden die hin- und hergehenden Bewegungen der Kolben 30" bis 36" erzeugt.

Der elektromotorische Teil 26" des Aggregats 10" weist einen Stator 82" auf, sowie einen Rotor 88", der bei diesem Ausführungsbeispiel Wicklungen 84" und Magnetkerne 86" trägt.

Um das Kurvenglied 66" um die Drehachse 64" anzutreiben, ist der Rotor 88" des elektromotorischen Teils 26" mit dem Kurvenglied 66" drehfest verbunden.

Der elektromotorische Teil 26" dient hier somit als Elektromotor zum Antreiben des kolbenmotorischen Teils 28", so dass mit dem Aggregat 10" ein Kompressor geschaffen ist, der keinen externen Motor als Antrieb benötigt. Vielmehr ist der Antriebsmotor bei dem Aggregat 10" in das Gehäuse 12" integriert.

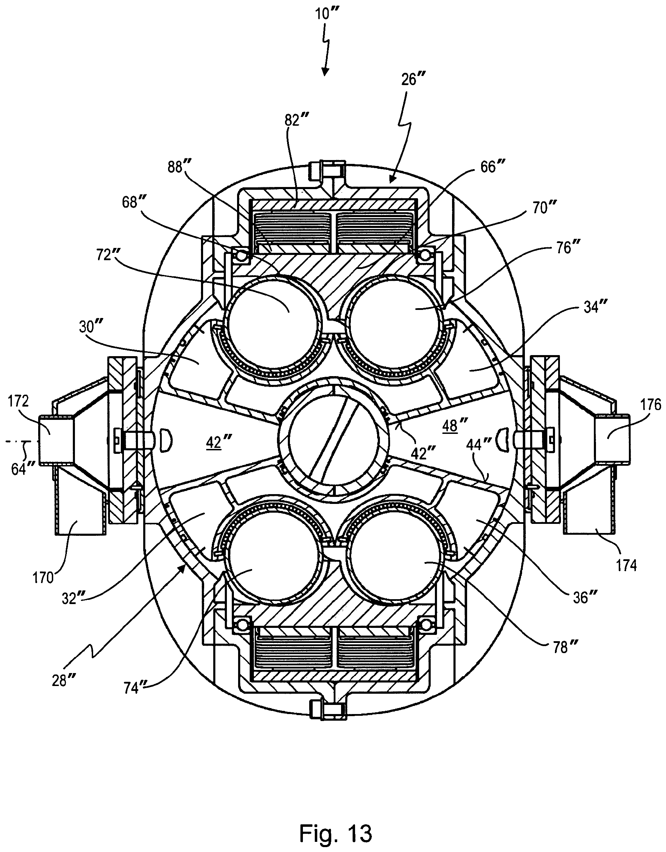

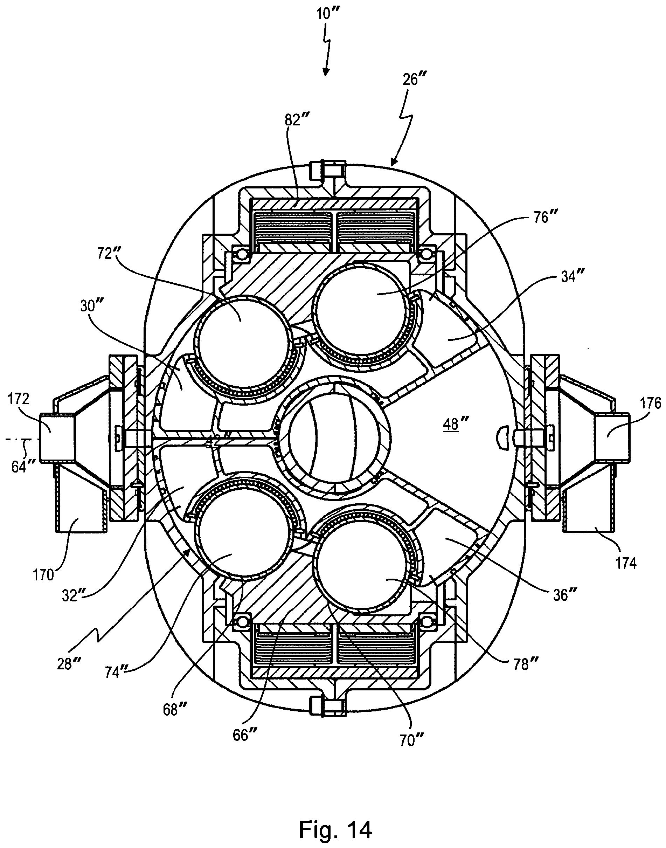

Während die Arbeitskammer 42" in Fig. 12 ihr maximales Volumen und die Arbeitskammer 48" ihr minimales Volumen einnimmt, zeigt Fig. 13 eine Stellung der Kolben 30" bis 36", in der sich das Volumen der Arbeitskammer 42" ausgehend von Fig. 12 verringert und das Volumen der Arbeitskammer 48" vergrößert hat, während Fig. 14 schließlich den Zustand zeigt, in dem die Arbeitskammer 42" ihr minimales Volumen und die Arbeitskammer 48" ihr maximales Volumen einnimmt. Durch diese Atmungsbewegung der Arbeitskammern 42" und 48" wird in den Arbeitskammern 42" und 48" jeweils Frischgas angesaugt, dann verdichtet und als Druckgas ausgestoßen.

Bei allen zuvor beschriebenen Ausführungsbeispielen der Aggregate 10, 10' und 10" sind die Kugeln 72 bis 78 bzw. 72' bis 78' bzw. 72" bis 78" in den zugehörigen Kugelpfannen so gelagert, dass die Kugeln beim Entlanglaufen entlang der Steuerkurven 68, 70 bzw. 68', 70' bzw. 68", 70" nicht auf Scherung beansprucht werden, sondern die Kraftlinien stets zentral durch die Kugeln und die zugehörigen Kugelpfannen und die Steuerkurven hindurchgeht.

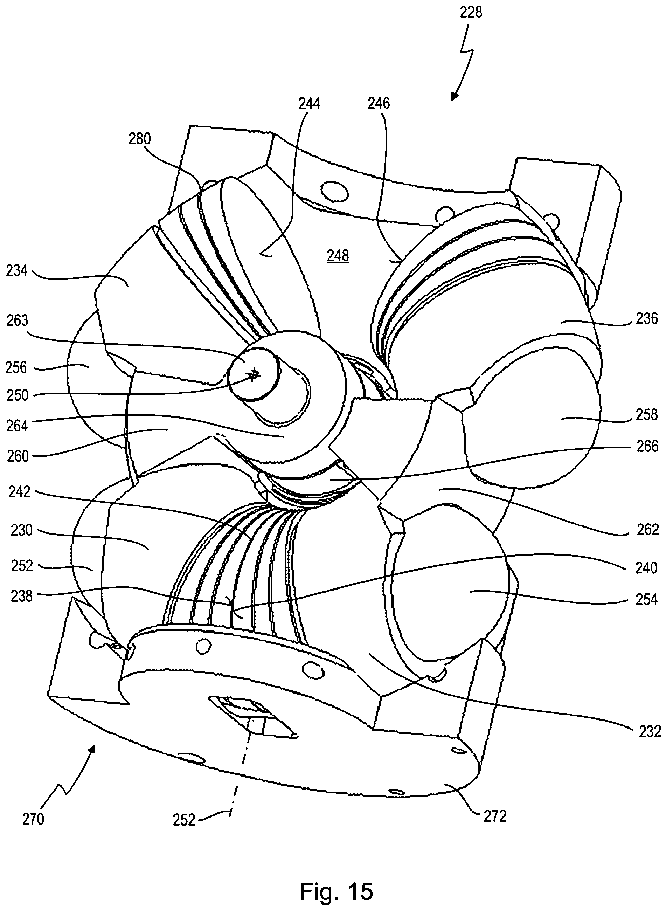

In Fig. 15 bis 17 ist ein weiteres Ausführungsbeispiel eines kolbenmotorischen Teils 228 gezeigt. Der kolbenmotorische Teil 228 kann ohne oder mit geringfügigen baulichen Anpassungen anstelle des kolbenmotorischen Teils 28 in dem Aggregat 10, anstelle des kolbenmotorischen Teils 28' in dem Aggregat 10' oder anstelle des kolbenmotorischen Teils 28" in dem Aggregat 10" verwendet werden.

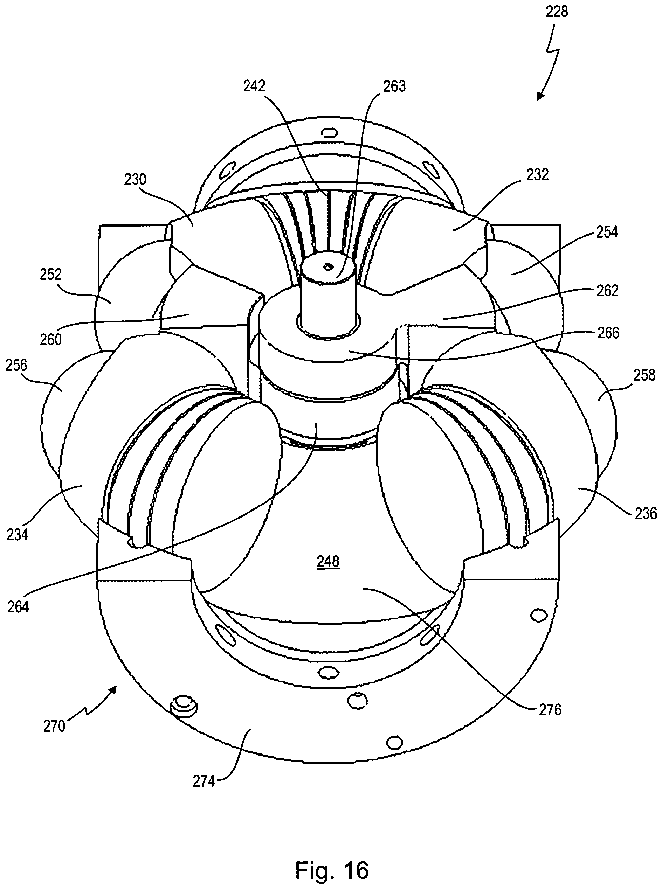

Gemäß Fig. 15 und 16 weist der kolbenmotorische Teil 228 einen ersten Kolben 230, einen zweiten Kolben 232, einen dritten Kolben 234 und einen vierten Kolben 236 auf.

Der erste Kolben 230 weist eine erste Endfläche 238 und der zweite Kolben 232 weist eine zweite Endfläche 240 auf, zwischen denen eine Arbeitskammer 242 definiert ist, die in der in Fig. 15 und 16 gezeigten Stellung der Kolben 230 und 232 ihr minimales Volumen einnimmt. Der dritte Kolben 234 weist eine dritte Endfläche 244 und der vierte Kolben 236 weist eine vierte Endfläche 246 auf, die zwischen sich eine zweite Arbeitskammer 248 definieren. In der in Fig. 15 und 16 gezeigten Stellung der Kolben 234 und 236 nimmt die Arbeitskammer 248 ihr maximales Volumen ein.

Die vier Kolben 230, 232, 234 und 236 sind um eine gemeinsame Schwenkachse 250 verschwenkbar, wobei die Schwenkbewegungen der Kolben 230, 232, 234 und 236 aus der Umlaufbewegung der Kolben 230, 232, 234, 236 um eine Drehachse 252 senkrecht zur Schwenkachse 250 abgeleitet wird. Die Schwenkachse 250 läuft dabei zusammen mit dem Kolben 230, 232, 234, 236 um die Drehachse 252 um, wie dies mit Bezug auf die kolbenmotorischen Teile 28, 28' oben bereits beschrieben wurde. Die Steuerung der Schwenkbewegungen erfolgt dabei wie in den vorherigen Ausführungsbeispielen über Lauforgane, die in Form von Kugeln 252 (Kolben 230), 254 (Kolben 232), 256 (Kolben 234) und 258 (Kolben 236) ausgebildet sind. Die Kugeln 252, 254, 256, 258 laufen dabei in nicht dargestellten Steuerkurven, wie bereits mit Bezug auf die kolbenmotorischen Teile 28, 28' und 28" oben beschrieben wurde.

Wie bei den vorherigen Ausführungsbeispielen ist der erste Kolben 230 mit dem dritten Kolben 234 über einen Brückenabschnitt 260 starr verbunden, und der zweite Kolben 232 ist mit dem vierten Kolben 236 über einen weiteren Brückenabschnitt 262 starr verbunden. Somit sind die Schwenkbewegungen des ersten Kolbens 230 und des dritten Kolbens 234 gleichsinnig um die Schwenkachse 250, und die Schwenkbewegungen des zweiten Kolbens 232 und des vierten Kolbens 236 sind ebenfalls gleichsinnig zueinander. Die Schwenkbewegungen des ersten Kolbens 230 und des zweiten Kolbens 232 sind entsprechend gegensinnig zueinander, ebenso die Schwenkbewegungen des dritten Kolbens 234 und des vierten Kolbens 236.

Im Unterschied zu den vorherigen Ausführungsbeispielen sind die Kolben 230, 232, 234 und 236 an der Schwenkachse 250, die durch einen Achszapfen 263 gebildet wird, gehalten und gelagert. Der Achszapfen 263 kann dabei als Hohlzapfen ausgebildet sein.

Zur Lagerung der Kolben 230, 232, 234 und 236 an der Schwenkachse 250 (Achszapfen 263) sind an den Brückenabschnitten 260 und 262 Lageraugen 264 (Brückenabschnitt 260) und 266 (Brückenabschnitt 262) angeordnet, die mit dem übrigen Brückenabschnitt 260 bzw. 262 vorzugsweise einstückig ausgebildet sind. Die Lageraugen 264 und 266 sind auf dem Achszapfen 263 drehbar um die Schwenkachse 250 gelagert.

Die Lagerung der Lageraugen 264 und 266 an dem Achszapfen 263 kann mittels Gleitlagern, Nadellagern oder Kugellagern realisiert sein.

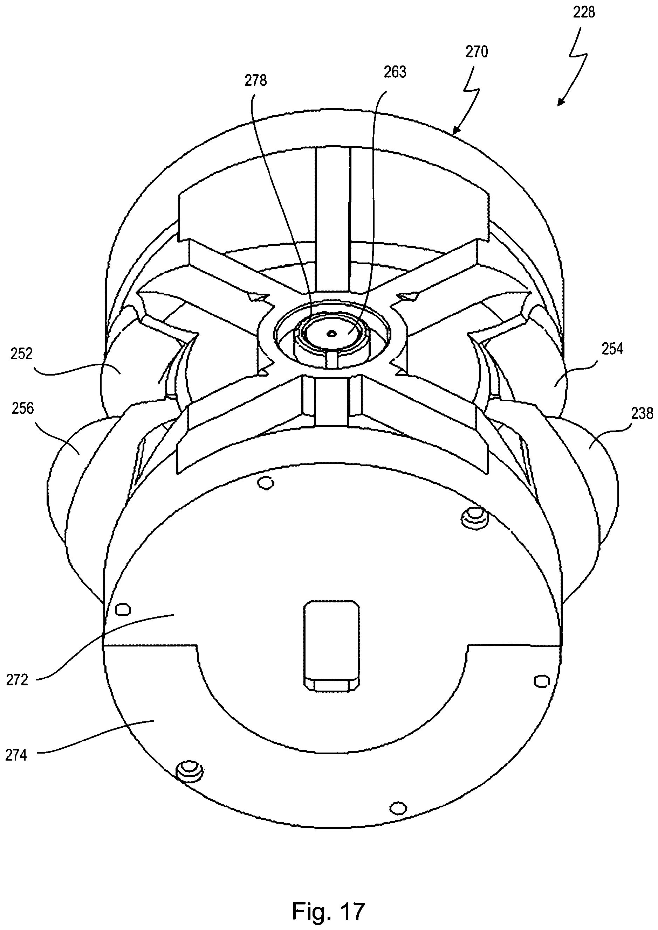

Die Kolbenpaare 230, 234 und 232, 236 sind wie bei den vorhergehenden Ausführungsbeispielen in einem Kolbenkäfig 270 aufgenommen, der gemäß Fig. 17 aus zwei Hälften 272 und 274 besteht, wobei in Fig. 15 nur die Hälfte 272 und in Fig. 16 nur die Hälfte 274 des Kolbenkäfigs 270 gezeigt ist. Die beiden Hälften 272 und 274 des Kolbenkäfigs 270 bilden innenseitig an die Außenkontur der Kolben 230, 232, 234 und 236 angepasste bogenförmige Führungsschalen aus, von denen in Fig. 16 eine mit dem Bezugszeichen 276 versehen ist.

Gemäß Fig. 17 weist der Kolbenkäfig außenseitig jeweils ein Lagerauge 278 auf (in Fig. 17 ist nur eines dieser Lageraugen zu sehen), in denen der Achszapfen 263 aufgenommen ist.

Die Ausgestaltung des kolbenmotorischen Teils 228 hat den Vorteil, dass die Kolben 230, 232, 234 und 236 im Wesentlichen ohne Wand-Gleitreibung in dem Kolbenkäfig 270 ihre Schwenkbewegungen um die Schwenkachse 250 ausführen können, so dass nur die Kolbenringe (beispielsweise 280 bei dem Kolben 234) Kontakt mit den Führungsschalen 276 im Kolbenkäfig 270 haben. Hierdurch ist die Reibung und entsprechend die Wärmeentwicklung reduziert und der Verschleiß verringert.

Im Fall, dass der Kolbenkäfig 270 um die Drehachse 252 rotiert, werden Fliehkräfte, die auf die Kolben 230, 232, 234, 236 wirken, von dem Achszapfen 263 und den Lageraugen 264, 266 aufgenommen und führen nicht zu einer erhöhten Kolbenreibung in den Führungsschalen 276 in dem Kolbenkäfig 270.

Wie bereits erwähnt, kann der kolbenmotorische Teil 228 in dem Aggregat anstelle des kolbenmotorischen Teils 28 verwendet werden. In diesem Fall, in dem das Aggregat 10 als sog. "Range-Extender" verwendet wird, ist das Kurvenglied 68 fest mit dem Gehäuse 12 verbunden. Der Kolbenkäfig 270 des kolbenmotorischen Teils 228 ist dann mit dem Rotor 88 des elektromotorischen Teils 26 fest verbunden und mit diesem gemeinsam rotierend. Das Gleiche gilt, wenn der kolbenmotorische Teil 228 anstelle des kolbenmotorischen Teils 28' in dem Aggregat 10' verwendet wird.

Im Falle der Verwendung des kolbenmotorischen Teils 228 in dem Aggregat 10" anstelle des kolbenmotorischen Teils 28" ist das Kurvenglied 66" nicht gehäusefest, sondern um die Drehachse 64" umlaufend ausgebildet. In diesem Fall ist auch der Kolbenkäfig 270 des kolbenmotorischen Teils 228 als Stator ausgebildet.

## Patentansprüche

1. Aggregat, insbesondere Hybridmotor, Stromgenerator oder Kompressor, mit einem Gehäuse (12; 12'), in dem ein kolbenmotorischer Teil (28; 28'; 228) und ein elektromotorischer Teil (26; 26') angeordnet sind, wobei der kolbenmotorische Teil (28; 28'; 228) einen ersten Kolben (30; 30'; 230) mit einer ersten Endfläche (38; 38'; 238) und einen zweiten Kolben (32; 32'; 232) mit einer zweiten Endfläche (40; 40'; 240) aufweist, wobei der erste Kolben (30; 30'; 230) und der zweite Kolben (32; 32'; 232) hin- und hergehende Bewegungen ausführen, wobei zwischen der ersten Endfläche (38; 38'; 238) und der zweiten Endfläche (40; 40'; 240) eine Arbeitskammer (42; 42'; 242) für ein Arbeitsmedium vorhanden ist, die sich aufgrund der hin- und hergehenden Bewegungen der Kolben (30, 32; 30', 32'; 230, 232) periodisch verkleinert und vergrößert, und wobei der elektromotorische Teil (26; 26') einen ringförmigen Rotor (88; 88") aufweist, der um eine gehäusefeste Drehachse (64; 64'; 252) in dem Gehäuse (12; 12') umlaufen kann, wobei in dem Gehäuse ein dritter Kolben (34; 34'; 234) mit einer dritten Endfläche (44; 44'; 244) und ein vierter Kolben (36; 36'; 236) mit einer vierten Endfläche (46; 46'; 246) angeordnet sind, wobei der dritte Kolben (34; 34'; 234) und der vierte Kolben (36; 36'; 236) hin- und hergehende Bewegungen ausführen, wobei zwischen der dritten Endfläche (44; 44'; 244) und der vierten Endfläche (46; 46'; 246) eine weitere Arbeitskammer (48; 48'; 248) für ein Arbeitsmedium vorhanden ist, die sich aufgrund der hin- und hergehenden Bewegungen des dritten und vierten Kolbens (34, 36; 34', 36'; 234, 236) periodisch verkleinert und vergrößert, wobei die hin- und hergehenden Bewegungen der Kolben (30, 32, 34, 36; 30', 32', 34', 36'; 230, 232, 234, 236) um eine Schwenkachse (50; 50'; 250) ausgeführt werden, die senkrecht zur Drehachse (64; 64'; 252) verläuft, **dadurch gekennzeichnet, dass** der Rotor (88; 88') den kolbenmotorischen Teil (28; 28'; 228) umgibt, und dass der erste Kolben (30; 30'; 230) und der dritte Kolben (34; 34'; 234) starr miteinander verbunden sind, und dass der zweite Kolben (32; 32'; 232) und der vierte Kolben (36; 36'; 236) starr miteinander verbunden sind, so dass die Arbeitskammer (42; 42'; 242) und die weitere Arbeitskammer (48; 48'; 248) sich gegensinnig verkleinern und vergrößern, wobei der erste Kolben (30; 30'; 230), der zweite Kolben (32; 32'; 232), der dritte Kolben (34; 34'; 234) und der vierte Kolben (36; 36'; 236) gemeinsam um die Drehachse (64; 64'; 252) umlaufen können und die hin- und hergehenden Bewegungen der Kolben (30, 32, 34, 36; 30', 32', 34', 36'; 230, 232) aus der Umlaufbewegung um die Drehachse (64; 64'; 252) abgeleitet sind, wobei die Kolben (30, 32, 34, 36; 30', 32', 34', 36'; 230, 232, 234, 236) in einem Kolbenkäfig (80; 80'; 270) angeordnet sind, der mit den Kolben (30, 32, 34, 36; 30', 32', 34', 36'; 230, 232, 234, 236) gemeinsam um die Drehachse (64; 64'; 252) umläuft, und wobei der Rotor (88; 88') mit dem Kolbenkäfig (80; 80'; 270) drehfest verbunden oder drehfest gekoppelt ist.

2. Aggregat nach Anspruch 1, **dadurch gekennzeichnet, dass** der Rotor (88') mit dem Kolbenkäfig (80') über eine Kupplung (140) drehfest koppelbar ist, wobei bei geöffneter Kupplung (140) der Rotor (88') von dem Kolbenkäfig (80') entkoppelt ist.

3. Aggregat nach Anspruch 2, **dadurch gekennzeichnet, dass** der Rotor (88') mit einer Antriebs-/Abtriebswelle (162) verbunden ist.

4. Aggregat nach Anspruch 3, **dadurch gekennzeichnet, dass** bei geschlossener Kupplung (140) der Kolbenkäfig (80') mit der Antriebs-/Abtriebswelle (162) verbunden ist.

5. Aggregat nach einem der Ansprüche 1 bis 4, **dadurch gekennzeichnet, dass** die hin- und hergehende Bewegung der Kolben (30, 32, 34, 36; 30', 32', 34', 36'; 230, 232, 234, 236) aus ihrer Umlaufbewegung durch ein Kurvenglied (66; 66') abgeleitet ist, das zwei Steuerkurven (68, 70; 68', 70') aufweist und die Kolben (30, 32, 34, 36; 30', 32', 34', 36'; 230, 232, 234, 236) ringförmig umgibt und nicht mit dem Kolbenkäfig (80; 80'; 270) um die Drehachse (64; 64'; 252) um läuft, wobei der erste Kolben (30; 30'; 230), der zweite Kolben (32; 32'; 232), der dritte Kolben (34, 34'; 234) und der vierte Kolben (36, 36'; 236) jeweils zumindest ein Lauforgan aufweisen, die beim Umlaufen der Kolben (30, 32, 34, 36; 30', 32', 34', 36'; 230, 232, 234, 236) um die Drehachse (64; 64'; 252) entlang der Steuerkurven (68, 70; 68', 70') geführt sind.

6. Aggregat nach Anspruch 5, **dadurch gekennzeichnet, dass** das jeweilige Lauforgan als Kugel (72, 74; 72', 74'; 252, 254) ausgebildet ist, die in einer jeweiligen Kugelpfanne (73, 75) an einer jeweiligen, von der ersten bzw. zweiten Endfläche (38, 40; 38', 40') abgewandten Rückseite der Kolben (30, 32, 34, 36; 30', 32', 34', 36'; 230, 232, 234, 236) frei drehbar gelagert ist.

7. Aggregat, insbesondere Hybridmotor, Stromgenerator oder Kompressor, mit einem Gehäuse (12"), in dem ein kolbenmotorischer Teil (28"; 228) und ein elektromotorischer Teil (26") angeordnet sind, wobei der kolbenmotorische Teil (28"; 228) einen ersten Kolben (30"; 230) mit einer ersten Endfläche (38"; 238) und einen zweiten Kolben (32"; 232) mit einer zweiten Endfläche (40"; 240) aufweist, wobei der erste Kolben (30"; 230) und der zweite Kolben (32"; 232) hin- und hergehende Bewegungen ausführen, wobei zwischen der ersten Endfläche (38"; 238) und der zweiten Endfläche (40"; 240) eine Arbeitskammer (42"; 242) für ein Arbeitsmedium vorhanden ist, die sich aufgrund der hin- und hergehenden Bewegungen der Kolben (30", 32"; 230, 232) periodisch verkleinert und vergrößert, und wobei der elektromotorische Teil (26") einen ringförmigen Rotor (88") aufweist, der um eine gehäusefeste Drehachse (64"; 252) in dem Gehäuse (12") umlaufen kann, wobei in dem Gehäuse ein dritter Kolben (34"; 234) mit einer dritten Endfläche (44"; 244) und ein vierter Kolben (36"; 236) mit einer vierten Endfläche (46"; 246) angeordnet sind, wobei der dritte Kolben (34"; 234) und der vierte Kolben (36"; 236) hin- und hergehende Bewegungen ausführen, wobei zwischen der dritten Endfläche (44"; 244) und der vierten Endfläche (46"; 246) eine weitere Arbeitskammer (48"; 248) für ein Arbeitsmedium vorhanden ist, die sich aufgrund der hin- und hergehenden Bewegungen des dritten und vierten Kolbens (34", 36"; 234, 236) periodisch verkleinert und vergrößert, wobei die hin- und hergehenden Bewegungen der Kolben (30", 32", 34", 36"; 230, 232, 234, 236) um eine Schwenkachse (50"; 250) ausgeführt werden, die senkrecht zur Drehachse (64"; 252) verläuft, **dadurch gekennzeichnet, dass** der Rotor (88") den kolbenmotorischen Teil (28"; 228) umgibt, und dass der erste Kolben (30"; 230) und der dritte Kolben (34"; 234) starr miteinander verbunden sind, und dass der zweite Kolben (32"; 232) und der vierte Kolben (36"; 236) starr miteinander verbunden sind, so dass die Arbeitskammer (42"; 242) und die weitere Arbeitskammer (48"; 248) sich gegensinnig verkleinern und vergrößern, wobei die Kolben (30", 32", 34", 36"; 230, 232, 234, 236) nicht um die Drehachse (64"; 252) umlaufen, wobei die hin- und hergehenden Bewegungen der Kolben (30", 32", 34", 36"; 230, 232, 234, 236) aus der Umlaufbewegung eines Kurvengliedes (66") um die Drehachse (64") abgeleitet sind, das zwei Steuerkurven (68", 70") aufweist und die Kolben (30", 32", 34", 36"; 230, 232, 234, 236) ringförmig umgibt, wobei der erste Kolben (30"; 230), der zweite Kolben (32"; 232), der dritte Kolben (34"; 234) und der vierte Kolben (36"; 236) jeweils zumindest ein Lauforgan aufweist, die beim Umlaufen des Kurvengliedes (66") um die Drehachse (64") entlang der Steuerkurven (68", 70") geführt sind, und wobei der Rotor (88") mit dem Kurvenglied (66") drehfest verbunden oder drehfest gekoppelt ist.

8. Aggregat nach Anspruch 7, **dadurch gekennzeichnet, dass** das jeweilige Lauforgan als Kugel (72", 74"; 252, 254) ausgebildet ist, die in einer jeweiligen Kugelpfanne (73, 75) an einer jeweiligen, von der ersten bzw. zweiten Endfläche (38", 40") abgewandten Rückseite der Kolben (30", 32", 34", 36"; 230, 232, 234, 236) frei drehbar gelagert ist.

9. Aggregat nach einem der Ansprüche 1 bis 8, **dadurch gekennzeichnet, dass** die hin- und hergehenden Bewegungen des ersten und zweiten Kolbens (230, 232) Schwenkbewegungen um die Schwenkachse (250) sind, und dass der erste Kolben (230) und der zumindest eine zweite Kolben (232) an der Schwenkachse (250) gehalten und gelagert sind.

## Claims

1. An aggregate, in particular a hybrid engine, electrical power generator or compressor, comprising a housing (12; 12') in which are arranged a piston motor part (28; 28'; 228) and an electric motor part (26; 26'), wherein the piston motor part (28; 28'; 228) has a first piston (30; 30'; 230) having a first end face (38; 38'; 238) and a second piston (32; 32'; 232) having a second end face (40; 40'; 240), wherein the first piston (30; 30'; 230) and the second piston (32; 32'; 232) perform reciprocating motions, wherein between the first end face (38; 38'; 238) and the second end face (40; 40'; 240) is arranged a working chamber (42; 42'; 242) for a working medium, which working chamber is periodically reduced and enlarged in size because of the reciprocating motions of the pistons (30, 32; 30', 32'; 230, 232), and wherein the electric motor part (26; 26') has an annular rotor (88; 88') which can rotate in the housing (12; 12') about a rotation axis (64; 64'; 252) that is fixed relative to the housing, wherein in the housing is arranged a third piston (34; 34'; 234) having a third end face (44; 44'; 244) and a fourth piston (36; 36'; 236) having a fourth end face (46; 46'; 246), wherein the third piston (34; 34'; 234) and the fourth piston (36; 36'; 236) perform reciprocating motions, wherein between the third end face (44; 44'; 244) and the fourth end face (46; 46'; 246) is provided a further working chamber (48; 48'; 248) for a working medium, which further working chamber periodically reduces and enlarges in size because of the reciprocating motions of the third and fourth pistons (34, 36; 34', 36'; 234, 236), wherein the reciprocating motions of the pistons (30, 32, 34, 36; 30', 32', 34', 36'; 230, 232, 234, 236) are performed about a pivot axis (50; 50'; 250), which is perpendicular to the rotation axis (64; 64'; 252), **characterized in that** the rotor (88; 88') surrounds the piston motor part (28; 28'; 228), and that the first piston (30; 30'; 230) and the third piston (34; 34'; 234) are rigidly connected together, and **in that** the second piston (32; 32'; 232) and the fourth piston (36; 36'; 236) are rigidly connected together so that the working chamber (42; 42'; 242) and the further working chamber (48; 48'; 248) reduce and enlarge in size in opposition to each other, wherein the first piston (30; 30'; 230), the second piston (32; 32'; 232), the third piston (34; 34'; 234) and the fourth piston (36; 36'; 236) can revolve together about the rotation axis (64; 64'; 252), and the reciprocating motions of the pistons (30, 32, 34, 36; 30', 32'; 34', 36'; 230, 232, 234, 236) are derived from the revolving motions about the rotation axis (64; 64'; 252), wherein the pistons (30, 32, 34, 36; 30', 32'; 34', 36'; 230, 232, 234, 236) are arranged in a piston cage (80; 80'; 270) which revolves in common with the pistons (30, 32, 34, 36; 30', 32'; 34', 36'; 230, 232, 234, 236) about the rotation axis (64; 64'; 252), and wherein the rotor (88; 88') is connected or coupled rotationally fixed with the piston cage (80; 80'; 270).

2. The aggregate of claim 1, **characterized in that** the rotor (88') can be coupled rotationally fixed with the piston cage (80') via a coupling (140), wherein when the coupling (140) is opened, the rotor (88') is decoupled from the piston cage (80').

3. The aggregate of claim 2, **characterized in that** the rotor (88') is connected with a drive/output shaft (162).

4. The aggregate of claim 3, **characterized in that** when the coupling (140) is closed, the piston cage (80') is connected with the drive/output shaft (162).

5. The aggregate of any of claims 1 through 4, **characterized in that** the reciprocating motions of the pistons (30, 32, 34, 36; 30', 32'; 34', 36'; 230, 232, 234, 236) are derived from their revolving motions by a curve element (66; 66') which has two control curves (68, 70; 68', 70') and surrounds the pistons (30, 32, 34, 36; 30', 32'; 34', 36'; 230, 232, 234, 236) in the manner of a ring and does not revolve with the piston cage (80; 80'; 270) about the rotation axis (64; 64'; 252), wherein the first piston (30; 30'; 230), the second piston (32; 32'; 232), the third piston (34; 34'; 234) and the fourth piston (36; 36'; 236) each have at least one running element which is guided along the control curve (68; 68') on revolution of the pistons (30, 32, 34, 36; 30', 32'; 34', 36'; 230, 232, 234, 236) about the rotation axis (64; 64'; 252).

6. The aggregate of claim 5, **characterized in that** the respective running element is configured as a ball (72, 74; 72', 74'; 252, 254) which is mounted freely rotatable in a respective ball socket (73, 75) on a respective back of the pistons (30, 32, 34, 36; 30', 32'; 34', 36'; 230, 232, 234, 236) which back faces away from the first and second end faces (38, 40; 38', 40') respectively.

7. An aggregate, in particular a hybrid engine, electrical power generator or compressor, comprising a housing (12") in which are arranged a piston motor part (28"; 228) and an electric motor part (26"), wherein the piston motor part (28"; 228) has a first piston (30"; 230) having a first end face (38"; 238) and a second piston (32"; 232) having a second end face (40"; 240), wherein the first piston (30"; 230) and the second piston (32"; 232) perform reciprocating motions, wherein between the first end face (38") and the second end face (40"; 240) is arranged a working chamber (42"; 242) for a working medium, which working chamber is periodically reduced and enlarged in size because of the reciprocating motions of the pistons (30", 32"; 230, 232), and wherein the electric motor part (26") has an annular rotor (88") which can rotate in the housing (12") about a rotation axis (64"; 252) that is fixed relative to the housing, wherein in the housing is arranged a third piston (34"; 234) having a third end face (44"; 244) and a fourth piston (36"; 236) having a fourth end face (46"; 246), wherein the third piston (34"; 234) and the fourth piston (36"; 236) perform reciprocating motions, wherein between the third end face (44"; 244) and the fourth end face (46"; 246) is provided a further working chamber (48"; 248) for a working medium, which further working chamber periodically reduces and enlarges in size because of the reciprocating motions of the third and fourth pistons (34", 36"; 234, 236), wherein the reciprocating motions of the pistons (30", 32", 34", 36"; 230, 232, 234, 236) are performed about a pivot axis (50"; 250), which is perpendicular to the rotation axis (64"; 252), **characterized in that** the rotor (88") surrounds the piston motor part (28"; 228), and that the first piston (30"; 230) and the third piston (34"; 234) are rigidly connected together, and **in that** the second piston (32"; 232) and the fourth piston (36"; 236) are rigidly connected together so that the working chamber (42"; 242) and the further working chamber (48"; 248) reduce and enlarge in size in opposition to each other, wherein the pistons (30", 32", 34", 36"; 230, 232, 234, 236) do not revolve about the rotation axis (64"; 252), wherein the reciprocating motions of the pistons (30", 32", 34", 36"; 230, 232, 234, 236) are derived from the revolving motion of a curve element (66") about the rotation axis (64"), which element has two control curves (68", 70") and surrounds the pistons (30", 32", 34", 36"; 230, 232, 234, 236) in the manner of a ring, wherein the first piston (30"; 230), the second piston (32"; 232), the third piston (34"; 234) and the fourth piston (36"; 236) each have at least one running element which is guided along the control curves (68", 70") on revolution of the pistons (30", 32", 34", 36"; 230, 232, 234, 236) about the rotation axis (64"), and **in that** the rotor (88") is connected or coupled rotationally fixed with the curve element (66").

8. The aggregate of claim 7, **characterized in that** the respective running element is configured as a ball (72", 74"; 252, 254) which is mounted freely rotatable in a respective ball socket (73, 75) on a respective back of the pistons (30", 32", 34", 36"; 230, 232, 234, 236) which back faces away from the first and second end faces (38", 40") respectively.

9. The aggregate of any of claims 1 through 8, **characterized in that** the reciprocating motions of the first and second pistons (230, 232) are pivoting motions about the pivot axis (250) and **in that** the first piston (230) and the at least one second piston (232) are held and mounted on the pivot axis (250).

## Revendications

1. Groupe, notamment moteur hybride, générateur d'électricité ou compresseur, comprenant un carter (12 ; 12'), dans lequel sont disposés une partie à motorisation par piston (28 ; 28' ; 228) et une partie à motorisation électrique (26 ; 26'), la partie à motorisation par piston (28 ; 28' ; 228) possédant un premier piston (30 ; 30' ; 230) ayant une première surface terminale (38 ; 38' ; 238) et un deuxième piston (32 ; 32' ; 232) ayant une deuxième surface terminale (40 ; 40' ; 240), le premier piston (30 ; 30' ; 230) et le deuxième piston (32 ; 32' ; 232) accomplissant des mouvements de va-et-vient, une chambre de travail (42 ; 42' ; 242) pour un fluide de travail se trouvant entre la première surface terminale (38 ; 38' ; 238) et la deuxième surface terminale (40 ; 40' ; 240), laquelle se réduit et s'agrandit périodiquement en raison des mouvements de va-et-vient des pistons (30, 32 ; 30', 32' ; 230, 232) et la partie à motorisation électrique (26 ; 26') possédant un rotor (88 ; 88') de forme annulaire qui peut tourner autour d'un axe de rotation (64 ; 64' ; 252) solidaire du carter dans le carter (12 ; 12'), un troisième piston (34 ; 34' ; 234) ayant une troisième surface terminale (44 ; 44' ; 244) et quatrième piston (36 ; 36' ; 236) ayant une quatrième surface terminale (46 ; 46' ; 246) étant disposés dans le carter, le troisième piston (34 ; 34' ; 234) et le quatrième piston (36 ; 36' ; 236) accomplissant des mouvements de va-et-vient, une chambre de travail supplémentaire (48 ; 48' ; 248) pour un fluide de travail se trouvant entre la troisième surface terminale (44 ; 44' ; 244) et la quatrième surface terminale (46 ; 46' ; 246), laquelle se réduit et s'agrandit périodiquement en raison des mouvements de va-et-vient des troisième et quatrième pistons (34, 36 ; 34', 36' ; 234, 236), les mouvements de va-et-vient des pistons (30, 32, 34, 36 ; 30', 32', 34', 36' ; 230, 232, 234, 236) étant accomplis autour d'un axe de pivotement (50 ; 50' ; 250) qui suit un tracé perpendiculaire à l'axe de rotation (64 ; 64' ; 252), **caractérisé en ce que** le rotor (88 ; 88') entoure la partie à motorisation par piston (28 ; 28' ; 228), et **en ce que** le premier piston (30 ; 30' ; 230) et le troisième piston (34 ; 34' ; 234) sont reliés l'un à l'autre de manière rigide, et **en ce que** le deuxième piston (32 ; 32' ; 232) et le quatrième piston (36 ; 36' ; 236) sont reliés l'un à l'autre de manière rigide, de sorte que la chambre de travail (42 ; 42' ; 242) et la chambre de travail supplémentaire (48 ; 48' ; 248) se réduisent et s'agrandissent en sens inverse, le premier piston (30 ; 30' ; 230), le deuxième piston (32 ; 32' ; 232), le troisième piston (34 ; 34' ; 234) et le quatrième piston (36 ; 36' ; 236) pouvant tourner en commun autour de l'axe de rotation (64 ; 64' ; 252) et les mouvements de va-et-vient des pistons (30, 32, 34, 36 ; 30', 32', 34', 36' ; 230, 232) étant dérivés du mouvement de rotation autour de l'axe de rotation (64 ; 64' ; 252), les pistons (30, 32, 34, 36 ; 30', 32', 34', 36' ; 230, 232, 234, 236) étant disposés dans une cage à pistons (80 ; 80' ; 270) qui tourne autour de l'axe de rotation (64 ; 64' ; 252) conjointement avec les pistons (30, 32, 34, 36 ; 30', 32', 34', 36' ; 230, 232, 234, 236), et le rotor (88 ; 88') étant relié en rotation solidaire ou couplé en rotation solidaire à la cage à pistons (80 ; 80' ; 270).

2. Groupe selon la revendication 1, **caractérisé en ce que** le rotor (88') peut être couplé en rotation solidaire à la cage à pistons (80') par le biais d'un accouplement (140), le rotor (88') étant désaccouplé de la cage à pistons (80') lorsque l'accouplement (140) est ouvert.

3. Groupe selon la revendication 2, **caractérisé en ce que** le rotor (88') est relié à un arbre d'entraînement/de sortie (162).

4. Groupe selon la revendication 3, **caractérisé en ce que** lorsque l'accouplement (140) est fermé, la cage à pistons (80') est reliée à l'arbre d'entraînement/de sortie (162).

5. Groupe selon l'une des revendications 1 à 4, **caractérisé en ce que** le mouvement de va-et-vient des pistons (30, 32, 34, 36 ; 30', 32', 34', 36' ; 230, 232, 234, 236) est dérivé de son mouvement tournant par un élément à came (66 ; 66'), lequel possède deux cames de commande (68, 70 ; 68', 70') et entoure les pistons (30, 32, 34, 36 ; 30', 32', 34', 36' ; 230, 232, 234, 236) en forme d'anneau et ne tourne pas autour de l'axe de rotation (64 ; 64' ; 252) avec la cage à pistons (80 ; 80' ; 270), le premier piston (30 ; 30' ; 230), le deuxième piston (32 ; 32' ; 232), le troisième piston (34 ; 34' ; 234) et le quatrième piston (36 ; 36' ; 236) possédant respectivement au moins un organe de roulement qui est guidé le long des cames de commande (68, 70 ; 68', 70') lors de la rotation des pistons (30, 32, 34, 36 ; 30', 32', 34', 36' ; 230, 232, 234, 236) autour de l'axe de rotation (64 ; 64' ; 252).

6. Groupe selon la revendication 5, **caractérisé en ce que** l'organe de roulement respectif est réalisé sous la forme d'une sphère (72, 74 ; 72', 74' ; 252, 254) qui est montée à rotation libre dans un coussinet sphérique (73, 75) respectif au niveau d'un côté arrière des pistons (30, 32, 34, 36 ; 30', 32', 34', 36' ; 230, 232, 234, 236) à l'opposé de la première ou de la deuxième surface terminale (38, 40 ; 38', 40').

7. Groupe, notamment moteur hybride, générateur d'électricité ou compresseur, comprenant un carter (12") dans lequel sont disposés une partie à motorisation par piston (28" ; 228) et une partie à motorisation électrique (26"), la partie à motorisation par piston (28" ; 228) possédant un premier piston (30" ; 230) ayant une première surface terminale (38" ; 238) et un deuxième piston (32" ; 232) ayant une deuxième surface terminale (40" ; 240), le premier piston (30" ; 230) et le deuxième piston (32" ; 232) accomplissant des mouvements de va-et-vient, une chambre de travail (42" ; 242) pour un fluide de travail se trouvant entre la première surface terminale (38" ; 238) et la deuxième surface terminale (40" ; 240), laquelle se réduit et s'agrandit périodiquement en raison des mouvements de va-et-vient des pistons (30", 32" ; 230, 232) et la partie à motorisation électrique (26") possédant un rotor (88") de forme annulaire qui peut tourner autour d'un axe de rotation (64" ; 252) solidaire du carter dans le carter (12"), un troisième piston (34" ; 234) ayant une troisième surface terminale (44" ; 244) et un quatrième piston (36" ; 236) ayant une quatrième surface terminale (46" ; 246) étant disposés dans le carter, le troisième piston (34" ; 234) et le quatrième piston (36" ; 236) accomplissant des mouvements de va-et-vient, une chambre de travail supplémentaire (48" ; 248) pour un fluide de travail se trouvant entre la troisième surface terminale (44" ; 244) et la quatrième surface terminale (46" ; 246), laquelle se réduit et s'agrandit périodiquement en raison des mouvements de va-et-vient des troisième et quatrième pistons (34", 36" ; 234, 236), les mouvements de va-et-vient des pistons (30", 32", 34", 36" ; 230, 232, 234, 236) étant accomplis autour d'un axe de pivotement (50" ; 250) qui suit un tracé perpendiculaire à l'axe de rotation (64" ; 252), **caractérisé en ce que** le rotor (88") entoure la partie à motorisation par piston (28" ; 228), et **en ce que** le premier piston (30" ; 230) et le troisième piston (34" ; 234) sont reliés l'un à l'autre de manière rigide, et **en ce que** le deuxième piston (32" ; 232) et le quatrième piston (36" ; 236) sont reliés l'un à l'autre de manière rigide, de sorte que la chambre de travail (42" ; 242) et la chambre de travail supplémentaire (48" ; 248) se réduisent et s'agrandissent en sens inverse, les pistons (30", 32", 34", 36" ; 230, 232, 234, 236) ne tournant pas autour de l'axe de rotation (64" ; 252), les mouvements de va-et-vient des pistons (30", 32", 34", 36" ; 230, 232, 234, 236) étant dérivés du mouvement de rotation autour de l'axe de rotation (64") d'un élément à came (66"), lequel possède deux cames de commande (68", 70") et entoure les pistons (30", 32", 34", 36" ; 230, 232, 234, 236) en forme d'anneau, le premier piston (30" ; 230), le deuxième piston (32" ; 232), le troisième piston (34" ; 234) et le quatrième piston (36" ; 236) possédant respectivement au moins un organe de roulement qui est guidé le long des cames de commande (68", 70") lors de la rotation de l'élément à came (66") autour de l'axe de rotation (64"), et le rotor (88") étant relié en rotation solidaire ou couplé en rotation solidaire à l'élément à came (66").

8. Groupe selon la revendication 7, **caractérisé en ce que** l'organe de roulement respectif est réalisé sous la forme d'une sphère (72", 74" ; 252, 254) qui est montée à rotation libre dans un coussinet sphérique (73, 75) respectif au niveau d'un côté arrière des pistons (30", 32", 34", 36" ; 230, 232, 234, 236) à l'opposé de la première ou de la deuxième surface terminale (38", 40").

9. Groupe selon l'une des revendications 1 à 8, **caractérisé en ce que** les mouvements de va-et-vient des premier et deuxième pistons (230, 232) sont des mouvements de pivotement autour de l'axe de pivotement (250) et **en ce que** le premier piston (230) et l'au moins un deuxième piston (232) sont maintenus et supportés sur l'axe de pivotement (250).
